# EUROPÄISCHE PATENTSCHRIFT

(11) **EP 3 660 451 B1**
(45) Veröffentlichungstag und Bekanntmachung des Hinweises auf die Patenterteilung: **27.04.2022**
(21) Anmeldenummer: 18208934.2
(22) Anmeldetag: 28.11.2018
(51) Int. Cl.: G01C 15/08, F16M 11/02

(54) **INTELLIGENTES STATIONIERUNGS-MODUL**
INTELLIGENT STATIONING MODULE
MODULE DE STATIONNEMENT INTELLIGENT

(43) Veröffentlichungstag der Anmeldung: 03.06.2020
(73) Patentinhaber: Hexagon Technology Center GmbH, 9435 Heerbrugg (CH)
(72) Erfinder: HINDERLING, Jürg, CH-9437 Marbach (CH)
(74) Vertreter: Kaminski Harmann

(56) Entgegenhaltungen:
- EP-A1- 0 971 207
- EP-A1- 1 686 350
- EP-A1- 2 620 745
- EP-A1- 3 171 130
- EP-A1- 3 264 034
- AT-U1- 11 099
- DE-A1- 4 007 245
- DE-C1- 19 941 638
- US-A1- 2006 021 236

## Beschreibung

Die Erfindung betrifft ein Modul zur Verortung eines Vermessungsgeräts in Bezug auf eine Bodenmarke nach dem Oberbegriff des Anspruchs 1 sowie einer Methode und Einrichtung für eine derartige Verortung.

Die Erfindung betrifft speziell ein elektronisches Stationierungs- oder Verortungs-Modul, insbesondere ein intelligentes oder smartes Tribrach Modul, welches als Montageplattform für Vermessungsgeräte nutzbar ist. Speziell handelt es sich dabei um ein eigenständiges Modul, welches zwischen einer Aufstelleinrichtung, wie z.B. einem Stativ oder ähnlichem, und einem Vermessungsgerät anbringbar ist, um eine referenzierte und optional nivellierbare Aufstellung des Vermessungsgeräts über einem Bodenpunkt zu erzielen. Dieser Bodenpunkt kann dabei insbesondere in einem äußeren Koordinatensystem vermessen sein, und somit eine bekannte Lage im äußeren Koordinatensystem haben, sodass sich dieser Bodenpunkt für eine Verortung des Vermessungsgeräts in Bezug auf das äußere Koordinatensystem eignet, beispielsweise eine Bodenmarke, ein Vermessungspunkt oder Messpunkt, ein Festpunkt oder geodätischer Referenzpunkt, oder auch eine temporäre, lokale Referenz-Markierung auf einer Baustelle, etc.

Klassische Tribrach-Module sind im Wesentlichen mit einer unteren Montageplatte zur Verbindung mit der Aufstelleinrichtung und mit einer oberen Montageplatte zur Verbindung mit dem Vermessungsgerät, sowie mit zwei oder meist drei in einem Dreieck angeordneten längenverstellbaren Stellschrauben ausgebildet, welche diese Montageplatten verbindenden. Meist ist die oberen Montageplatte mit zumindest einer Libelle oder einer Dosenlibelle ausgebildet, mit deren Hilfe unter manueller Justierung der Stellschrauben die obere Montageplatte horizontal ausrichtbar ist. Oftmals ist die obere Montageplatte dabei mit einer Schnellwechsel- oder Schnellspanneinrichtung für ein Vermessungsgerät ausgebildet oder mit einer solchen verbunden. Beispiele gattungsgemäßer Tribrachs und deren Anwendung sind in entsprechender Literatur zum Vermessungswesen, beispielsweise im 2010 von Leica Geosystems AG veröffentlichten Dokument "Surveying Tribrachs - White Paper" (VII.10 -INT) oder anderen beschrieben.

Es ist dabei jedoch ein Nachteil, dass eine ordnungsgemäße Justierung eines derartigen Tribrachs einiges an Geschick und Fingerspitzengefühl erfordert, und wird besonders von unerfahrenen Benutzern durchaus als herausfordernd empfunden. Beim klassischen Vorgehen erfolgt meist eine grobe Nivellierung des Tribrachs mit einer Dosenlibelle und danach eine feinere Nivellierung mit der Röhrenlibelle, z.B. mit einer Alhidaden-Libelle oder Reiterlibelle, oder mit einem elektronischen Neigungsmesser am Vermessungsgerät.

Erschwerend kommt bei vielen Vermessungsaufgaben noch hinzu, dass nicht nur eine möglichst exakte Nivellierung oder Horizontierung anzustreben ist, sondern die Aufstellung des Vermessungsgeräts oft auch zentriert, also mit bekanntem Bezug oder Referenz, zu einem definierten Bodenpunkt als Festpunkt erforderlich ist. Ein derartiges Zentrieren beim Aufstellen des Stativs kann dabei mit einem fixieren des Vermessungsgeräts genau über einem Festpunkt, also z.B. einem Vermessungspunkt, einer Bodenmarke, Vermessungsmarke oder ähnlichem erfolgen. Zentrieren bedeutet dabei, dass die Projektion des Zentrums des horizontierten Tribrachs in Schwererichtung die Bodenmarke trifft. Ein Vermessungsstativ oder Dreibein hat dabei am Stativkopf bzw. in der Stativkopfplatte meist eine Öffnung (z.B. kreisrund mit Ø 6 bis 8 cm), über welcher das Vermessungsgerät direkt, bzw. meist mittels eines Tribrach zur Aufnahme des Vermessungsgeräts, von unten her mit einer sogenannten Herzschraube oder Zentralschraube auf einer meist planen, als sogenannter Stativplatte ausgebildeten, Fläche des Stativkopfs festgeklemmt wird. Durch geringfügiges Verschieben des Vermessungsgeräts in horizontaler Richtung kann dabei mittels eines optischen Lots oder einer Lotschnur ein Zentrieren des Vermessungsgeräts über einem Bodenpunkt, Vermarkungspunkt oder Vermessungspunkt erfolgen, bevor die Herzschraube endgültig fest angezogen wird. Dabei erfolgt meist ein iterativer Prozess von Horizontieren und Zentrieren durch Anpassungen am Stativ und/oder Tribrach. Die Herzschraube ist dabei vielfach hohl ausgebildet, sodass durch diese hindurch ein optisches Lot oder Laser-Lot zum Boden durchvisiert werden kann. Die Zentrierung der Gerätestationierung kann aber auch mit Hilfe von anderen Loten durchgeführt werden, z.B. mit einem Schnurlot oder Lot-Stab.

Wenn die Verlängerung der lotrechten Stehachse des Vermessungsgeräts durch die gewünschte Bodenmarke des Festpunkts verläuft, ist das Vermessungs-Instrument zentriert und kann Messungen im Bezugsystem des äußeren Koordinatensystems durchführen. Das Vermessungsgeräte-Achssystem sollte damit also lotrecht über dem Bodenpunkt stationiert sein, bzw. sollten allfällige Abweichungen in horizontaler Richtung in Ihrem Ausmaß möglichst genau bekannt sein. Die vertikale lotrechte Höhe des Vermessungsgeräte-Achssystems bzw. der Basis des Vermessungsgeräts über dem Bodenpunkt muss im Rahmen der Stationierung meist ebenfalls ermittelt werden, z.B. mit einem Maßband oder dergleichen, und im Vermessungsgerät eingegeben werden um vollständige Verortung herzustellen.

Im Sinne der mit heutigen Vermessungsgeräten erzielbaren Messgenauigkeit, sollt eine derartige Stationierung bzw. die Verortung mit einer Genauigkeit im Millimeterbereich bzw. im Winkelsekundenbereich oder vorzugsweise noch genauer erfolgen. Zudem ist in vielen Fällen dabei auch eine azimutale Referenz, also eine horizontale Ausrichtung in Bezug auf die Nordrichtung zu ermitteln.

All dies bedingt, dass eine Stationierung und Verortung von Vermessungsgeräten meist nur von geschultem Fachpersonal in vernünftiger Zeit und mit hinreichender Genauigkeit durchführbar ist. Speziell einfache Arbeiter, Bauleiter, Poliere, etc. - welche meist auch nur sporadisch mit derartigen Aufgaben konfrontiert sind - scheuen diese Arbeit daher oft und/oder sind unsicher und/oder langsam in Ihrer Ausführung. Zwar gibt es speziell weiterentwickelte Spezialversionen von Vermessungsgeräten, welche Unterstützung für eine Stationierung bieten, wie z.B. in US 2018/0003 493, EP 2 442 069, US 2010/0303 300, etc., jedoch sind derartige Geräte komplexer und aufwändiger, nicht einfach auszutauschen. Auch ist deren Anwendung oft von Gerät zu Gerät unterschiedlich und/oder erfordert Spezialwissen. Beispielsweise zeigt auch EP 3 264 034 ein geodätisches Vermessungsgerät mit einem Höhenmesssystem oder EP 1 207 369 einen Sensorträger zur Durchführung zentrierter Aufstellungen. EP 0971207 zeigt ein Vermessungsgerät mit integrierter Lot-Einheit zur Aufstellung. DE 199 41 638 schlägt ein Vermessungsgerät vor, welches mehrere divergierende Laserstrahlen zum Boden aussendet, um daraus eine Höhe über einem Bodenpunkt zu bestimmen. US 2006/021,236 und EP0971207 schlagen vor, in einem Messgerät eine Kamera in Richtung Boden als Stationierungshilfe zu nutzen. EP 3171130 schlägt einen Winkelmesser-Tisch zur Erfassung eines seitlichen Drehwinkels sowie einen Stützmechanismus der sich in Längsrichtung drehen kann vor, welcher zwischen Stativ und Vermessungsgerät angebracht wird. Damit kann Das Gerät in Richtung Boden messen. EP1686350 offenbart die Anbringung eines GPS-Empfängers an einem Vermessungsgerät. EP2620745 offenbart die Anbringung eines Aufsatzscanners auf einem Vermessungsgerät.

AT11099U offenbart die Anbringung eines Laserscanners auf einer Aufnahmeplattform, wobei die Aufnahmeplattform über eine starre Verbindung bestehend aus seitlichen Stützen und einer Bodenplatte mit einer Totalstation verbunden ist.

Zusammengefasst befinden insbesondere wenig geübte Anwender von Vermessungsgeräten die Arbeitsschritte einer Stationierung und Zentrierung des Vermessungsgeräts über einem Fixpunkt und einer Bestimmung der Instrumentenhöhe zur Verortung eines Vermessungsgeräts in einem äußeren Koordinatensystem als kompliziert. Viele Anwender sind auch in Sorge über potentielle Messfehler durch Fehlerhafte oder ungenaue Stationierung oder unbemerkte Bewegungen des Vermessungsgeräts über den Zeitraum der Vermessung hinweg, zum Beispiel, wenn das Stativ einsinkt und/oder die Aufstellung nicht optimal durchgeführt wurde.

Die vorliegende Erfindung kann dazu beitragen, diese Probleme zu reduzieren. Insbesondere können mit der Erfindung Fehler bei diesen manuellen Tätigkeiten vermeiden werden und/oder die Genauigkeit der Stationierung - und somit auch der darauf basierenden Vermessungen - verbessert werden. Speziell soll dabei auch nicht-Vermessungsfachleuten, wie beispielsweise Poliere oder andere Handwerker, die «Angst» vor dem Aufstellen eines hochentwickelten Vermessungsgeräts, wie einer Totalstation oder eines TPS, genommen werden.

Ein weiterer Aspekt, welcher mit der vorliegenden Erfindung verbessert werden kann, ist eine Stationierung des Vermessungsgeräts mit Bestimmung der Standpunktkoordinaten und Orientierung des Instrumentes. Insbesondere bei Freier Stationierung, also einer Aufstellung ohne Bodenpunkt, kann für wiederholte Aufstellungen am selben Ort eine weitere, in ihrer Durchführung aufwendige, Freie Stationierung vermeiden werden, indem nach einer initialen Freien Stationierung eine Bodenmarke unter dem stationierten

Gerät gesetzt wird, z.B. ein Schlaganker, einer Farbmarkierung, einer befestigten Zieltafel, einem Aufkleber, einer Kerbe, etc. Diese gesetzte Bodenmarke kann dann bei nachfolgenden Stationierungen entsprechend der vorliegenden Erfindung genutzt werden, und somit die nachfolgenden Stationierungen vereinfachen und auch sicherer gestalten. Wie auch bei anderen erfindungsgemäßen Ausführungsformen, kann dabei optional ein mittels der Kamera im erfindungsgemäßen Modul ermitteltes Bild bei der initialen Stationierung gespeichert werden, und bei einer erneuten Stationierung unter Anwendung eines photogrammetrischen Vergleichs des aktuellen und des gespeicherten Bilds die Stationierung (zumindest teilweise) ermittelt werden, insbesondere bei Anwendungen mit einer, entsprechend mit visuellen Features ausgebildeten Zieltafel, welche als Bodenmarke (zumindest während einem Zeitraum zwischen den Stationierungen) fix gesetzt wird.

Dabei sollen erfindungsgemäß auch Aspekte wie Kompatibilität, Verwendbarkeit und Nachrüstbarkeit mit einer Vielzahl von (auch älteren) Vermessungsgeräten, eine kompakte und robuste Bauform, autarke Energieversorgung, geringer Energiebedarf, etc. angestrebt werden. Vorzugsweise sollte eine Ausführungsform der Erfindung dabei als eigenständiges Modul oder Accessoire ausgeführt sein, welches ausgebildet ist um mit Standard-Vermessungsstativen und/oder Vermessungsgeräten bei Bedarf genutzt zu werden.

Es ist daher unter anderem auch ein Teil der Aufgabe der vorliegenden Erfindung, modular und vielfältig einsetzbar zu sein, also insbesondere etwa schlank, nachrüstbar, mit unterschiedlichen Vermessungsgeräten, etc. Auch Kompatibilität und Funktionalität in Hinblick auf eine vorzugsweise automatische digitale Dokumentation, z.B. in einem BIM (Building Information Modeling) -System, oder eine einfache Bedienung und Integrierbarkeit in die üblichen Bedienkonzepte, können im Rahmen der vorliegenden Erfindung erzielt werden.

Die vorliegende Erfindung kann also beispielsweise dabei helfen, eine Stationierung eines Vermessungsgeräts zu vereinfachen, zu beschleunigen und/oder Fehler bei der Stationierung und/oder während dem Betrieb des Vermessungsgeräts zu vermeiden bzw. zu verringern, speziell etwa im Vergleich zu klassischen Stationierungen mit iterativem Verstellen von mechanischen Tribrach-Modulen und Stativen unter Nutzung von Dosenlibellen, Maßband, Lot, etc.

Eine Aufgabe der Erfindung kann auch darin gesehen werden, die bisher manuell gehandhabte Stationierung eines Vermessungsgeräts durch einen möglichst automatisierten Prozess zu erleichtern, insbesondre dabei alle Messaufgaben zur Bestimmung der Verortung automatisch mit einem erfindungsgemäßen Modul durchzuführen. Die manuellen Schritte beim Aufstellen können sich dabei zum Beispiel beschränken auf: ein Aufklappen des Stativs in etwa über der Bodenmarke, (falls noch nicht geschehen - Anbringen des erfindungsgemäßen Moduls) und Anbringen des Vermessungsgeräts, sowie allenfalls ein manuelles Nivellieren und/oder ein Auflegen einer Zieltafel über der Bodenmarke. Speziell kann dabei erfindungsgemäß einerseits eine weitestgehend automatisierte Aufstellung des Vermessungsgeräts und anderseits eine vorzugsweise vollständige Automatisierung bei der Bestimmung der Transformation (z.B. einer Helmert-Transformation) zwischen den lokalen und globalen Koordinatensystemen erfolgen.

Insbesondere durch Forderungen nach erhöhter Messgeschwindigkeit treten während des Messbetriebs durch die Motoren und schnellen Bewegungen des Vermessungsgeräts auch höhere Beschleunigungen, Drehmomente, Ruck, Vibrationen, etc. gegenüber Aufstelleinrichtung des Vermessungsgeräts auf. Diese können - neben den ohnehin problematischen Einflüssen wie Verdrehung des Stativs, Einsinken von Stativbeinen, Temperatureinflüsse, etc. - zu zusätzlichen ungewollten Verschiebungen der Stationierung während des Messbetriebs führen.

Diese Aufgaben werden erfindungsgemäß durch die Merkmale der unabhängigen Ansprüche und/oder durch Merkmale der abhängigen Ansprüche gelöst bzw. diese Lösungen weitergebildet.

Die vorliegende Erfindung betrifft ein eigenständiges Modul zur Verortung eines mit einem Stativ über einer Bodenmarke aufgestellten Vermessungsgeräts in Bezug zu der Bodenmarke.

Das eigenständige Modul kann dabei insbesondere als ein montierbares und wieder demontierbares Gerät ausgebildet sein, welches abgesehen von einer allfälligen Datenkommunikationsverbindung zu einer externen Bedieneinheit und/oder einem Vermessungsgerät eine autark agierende, separate Einheit oder Komponente bildet.

Das Modul weist dabei ein Gehäuse auf, welches ausgebildet ist um zwischen dem Stativ und dem Vermessungsgerät angebracht zu werden. Das Gehäuse ist dabei insbesondere ausgebildet mit einer unteren Montageplatte oder Montageeinheit zur Verbindung mit dem Stativ sowie mit einer oberen Montageplatte oder Montageeinheit zur Verbindung mit dem Vermessungsgerät, wobei diese Verbindungen vorzugsweise mit im Vermessungswesen verkehrsüblichen oder genormten Stativschrauben und/oder Schnellspanneinrichtungen ausgebildet sind. In einer ersten Ausführungsform der Erfindung können dabei die beiden Montageplatten des erfindungsgemäßen Moduls fix zueinander, also insbesondere nicht verkippbar zueinander, ausgebildet sein. In einer zweiten Ausführungsform der Erfindung können dabei die beiden Montageplatten des erfindungsgemäßen Moduls, welches eine kompakte, vorzugsweise einstückige, Einheit bildet gegeneinander verstellbar, insbesondere in ihrer Neigung oder Verkippung zueinander einstellbar ausgebildet sein.

Das Modul weist auch zumindest eine Messkamera-Einheit auf, welche derart angeordnet und ausgebildet ist, dass - bei auf dem auf einem Stativ montierten Modul - eine unter dem Stativ befindliche Bodenmarke im Blickfeld der Messkamera-Einheit erfassbar ist. Insbesondere kann eine derartige Messkamera-Einheit als zentrale Messkamera ausgebildet sein, deren Blickfeld zentral durch das Stativ, also durch eine Ausnehmung in der Stativplatte oder durch eine Bohrung in der Herzschraube des Stativs, oder in anderen Worten im Wesentlichen oder in etwa mit einer Stehachse oder Zentralachse der Vermessungsgeräteaufstellung zusammenfallend, auf zumindest einen Teilbereich des Bodens unter dem Stativ gerichtet ist. Insbesondere kann eine derartige Messkamera-Einheit auch alternativ oder zusätzlich als periphere Messkamera ausgebildet sein, deren Blickfeld neben einer Schulter oder Stativplatte des Stativs, also zwischen den Stativbeinen hindurch auf zumindest einen Teilbereich des Bodens unter dem Stativ gerichtet ist.

In anderen Worten kann das Blickfeld einer Messkamera-Einheit eines erfindungsgemäßen Moduls dabei zentral durch das Stativ hinweg angeordnet sein, insbesondere durch eine Bohrung in einer Herzschraube mit welcher das Modul auf dem Stativ befestigt wird. Speziell kann dabei auch eine Einspiegelung des optionalen Laserpointers in das Blickfeld der Messkamera-Einheit erfolgen. Alternativ kann die Messkamera-Einheit und/oder deren Blickfeld derart einschwenkbar oder verschiebbar ausgebildet sein, dass das Blickfeld zentral durch das Stativ verläuft oder dieses zentralen Bereichs für einen Laserpointer freigibt, sodass wechselweise entweder der Laserpointer 28 oder die Messkamera einsetzbar ist. Das Blickfeld der Messkamera-Einheit eines erfindungsgemäßen Moduls kann dabei alternativ auch seitlich an einer Stativschulter oder einem Stativteller des Stativs vorbei angeordnet und in Richtung Bodenpunkt ausgerichtet sein, also z.B. auf einen Bereich zwischen den Stativbeinen.

Das Modul weist zudem eine Energieversorgung auf. Beispielsweise in Form eines Batteriefachs oder einer internen, vorzugsweise wiederaufladbaren Batterie.

Das Modul weist auch einen Neigungssensor auf, welcher zur Ermittlung einer Neigung des Moduls gegenüber einer Horizontalrichtung und/oder einer Vertikalrichtung in zumindest zwei Achsen ausgebildet ist. Der Neigungssensor befindet sich vorteilhaft in der unteren Montageplatte, die Neigung der oberen Montageplatte kann mittels des Neigungssensors des Vermessungsinstruments bestimmt werden.

Das Modul ist mit einer Kommunikationseinheit ausgestattet, welche ausgebildet ist, um eine Kommunikationsverbindung mit dem Vermessungsgerät und/oder einer externen Bedieneinheit herzustellen, vorzugsweise eine bidirektionale drahtlose Kommunikation über ein Funkmodul, insbesondere nach einem gängigen Funkstandard.

Eine Verortungseinheit im Modul, ist dabei derart ausgebildet, dass diese zumindest mit einer Bildinformation der Messkamera-Einheit, in deren Blickfeld die Bodenmarke enthalten ist, und einer Neigungsinformation vom Neigungssensor, die Verortung des Moduls in Bezug auf die Bodenmarke ermittelt, und diese Verortung und/oder für die Verortung erforderliche Rohdaten, über die Kommunikationseinheit bereitstellt. Diese Verortung kann dabei insbesondere zumindest eine Normalhöhe und einen lateralen Positionsversatz des Moduls gegenüber der Bodenmarke umfassen. Die Position des Moduls zum äußeren Koordinatensystem wird mittels eines Pivotpunktes exakt definiert. Bei der oben erwähnten, ersten Ausführungsform kann ein derartiger Pivotpunkt beispielsweise im axialen Zentrum auf der oberen Montageplatte liegen. Das Ermitteln der Verortung erfolgt dabei mit einer elektronischen Bildverarbeitung der Bildinformation, welche eine Lage der Bodenmarke in der Bildinformation in Form von Bildkoordinaten ermittelt, und der Neigungsinformation, aus deren geometrischen Beziehungen (welche aufgrund der Ausbildung und Anordnung von Messkamera und Neigungssensor bekannt sind) die Verortung berechnet wird. Kann dabei die Verortung anhand der Bildinformation mit einer Vermessung der Bodenmarke an sich, und/oder einer Vermessung eines visuellen Musters einer definierten Zieltafel, welche, vorzugsweise in definierter Lage, bei der Bodenmarke platziert ist, erfolgen, welche Vermessung in der Bildinformation erfolgt und dabei Abbildungseigenschaften der Messkamera-Einheit berücksichtigen kann.

Die Vermessung der Zieltafel in der Bildinformation kann dabei speziell eine Skalierung in dem Messkamera-Bild bestimmen. Anhand dieser Vermessung in der Bildinformation und der Skalierung kann dabei zumindest sowohl eine laterale Horizontalposition des Moduls (respektive eines in Bezug auf das Modul definierten Pivot-Punktes) gegenüber der Bodenmarke als auch eine Normalhöhe des Moduls (respektive eines in Bezug auf das Modul definierten Pivot-Punktes) über der Bodenmarke bestimmt werden. Die Vermessung der Zieltafel in der Bildinformation kann auch ein an der Zieltafel vorhandenes Messinstrument, wie z.B. einen Kompass (wie z.B. einen Magnetnadelkompass) in der Bildinformation auswerten, und mittels dieser Auswertung eine Orientierung nach Norden ermitteln. Ein anderes Beispiel für ein zusätzliches oder alternatives Messinstrument an der Zieltafel ist z.B. ein Neigungsmesser (wie z.B. eine Dosenlibelle oder Röhrenlibelle), anhand dessen Auswertung in der Bildinformation z.B. eine Feinkorrekturen der Tafelneigung erfolgen kann, falls die Zieltafel nicht horizontal auf der Bodenmarke aufliegt.

In einer erfindungsgemäßen Ausführungsform des Moduls ist dabei lediglich mit dem Modul und einer, auf der Bodenmarke aufgelegten Zieltafel eine automatische Verortung eines Vermessungsgeräts durchführbar. Eine Ausführungsform, welche ohne Zieltafel auskommen kann, hat einen distanzmessenden Laser-Pointer, der auf die Bodenmarke ausgerichtet wird und anhand welchem eine Normalhöhe gegenüber der Bodenmarke für die Verortung bestimmt wird.

Für eine vollständige Verortung in allen sechs Freiheitsgraden ist zusätzlich die Kenntnis der Azimutrichtung auf dem erfindungsgemäßen Modul erforderlich. Speziell wenn die Ausführungsform des erfindungsgemäßen Moduls selbst keinen hierfür ausgebildeten Nordsensor aufweist, kann die Azimutrichtung auch vom Vermessungsgerät geliefert werden, beispielsweise unter Berücksichtigung oder optischer oder mechanischer Vorgabe einer definierten Ausrichtung des Vermessungsgeräts zu einer Markierung auf der oberen Montageplatte des Moduls. Da die hierbei Verwendung findende Nordausrichtung lediglich im erfindungsgemäßen Modul zur Verortung in 6 Freiheitsgraden (6 DOF) genutzt wird, kann dabei die Anforderung an die Winkelgenauigkeit der Nordausrichtung vergleichsweise (z.B. gegenüber jener Winkelgenauigkeit welche mit dem Vermessungsgerät erzielbar ist/sein muss) geringgehalten werden, z.B. derart, dass diese auch mit einem mechanischen oder elektronischen Magnetkompass erzielbar ist. Beispielsweise ist eine Winkelgenauigkeit der Nordausrichtung im Rahmen der erfindungsgemäßen Verortung von in etwa 10 Winkelminuten bereits ausreichend.

Mit der vom Modul bereitgestellten Verortung kann damit das Vermessungsgerät einen Bezug zu einem äußeren Koordinatensystem, in welchem der Bodenpunkt bekannt ist, herstellen und seine Messungen in einem Bezug zu diesem äußeren Koordinatensystem durchführen. Wird zusätzlich eine winkelsekundengenaue absolute Orientierung des Horizontalwinkelkreises (=Nordrichtung) des Vermessungsgeräts verlangt, so kann diese nach herkömmlichen Verfahren auf dem Vermesssungsgerät selber ermittelt werden.

Das Modul entsprechend der Erfindung kann dabei in einer Ausführungsform optional mit einem Laserpointer oder Laserlot ausgebildet sein sowie mit einer Ablenkeinheit für den Laserpointer, welche derart ausgebildet ist, dass die Laserstrahlung des Laserpointers in Bezug auf das Modul auf den Bodenpunkt ausrichtbar ist. Der Laserstrahl des Laserpointers wird damit als Markier- oder Zeigestrahl verwendet. Insbesondere kann dabei ein Erfassen eines Werts der aktuellen Ablenkung als der Ablenkeinheit als Ablenkinformation erfolgen, beispielsweise mit einem Lage- oder Positionsencoder, Neigungssensor am Ablenkelement und/oder einer Auswertung eines Auftreffpunkts des Laserpointers in der Bildinformation. In anderen Worten kann eine Ablenkrichtung der Ablenkeinheit für den Laserpointer dabei also von einem Sensor erfasst werden, insbesondere von einem Winkelencoder, Lagegeber oder von einem zweiten Neigungssensor an einem Ablenkelement. Die Ablenkrichtung des Laserpointers kann aber auch alternativ oder zusätzlich mit einer Bildauswertung eines Auftreffpunts der Laserstrahlung des Laserpointers oder Laserlots in einem Bild der Messkamera-Einheit erfolgen. Die Ablenkinformation kann dabei aus dem Bild der Messkamera-Einheit bestimmt werden, womit auf einen für diesen Zweck ebenfalls möglichen Encoder in der Ablenkeinheit verzichtet werden kann. Da das Bild und Blickfeld der Messkamera-Einheit richtungskalibriert ist, ist im Bild eine Richtung des Laserpointer bestimmbar, z.B. indem ein Auftreffpunkt der Laserpointer-Strahlung im Bild bestimmt und vermessen wird, und eine Skalierung oder Länge der Zentralprojektion aus einer Distanzmessung mit einbezogen wird. Diese Distanzmessung kann dabei anhand einer bekannten Größe eines visuellen Kontrastmusters auf einer, auf der Bodenmarke liegenden Zieltafel im Bild der Messkamera beispielsweise mittels Zentralprojektion bestimmt werden.

Alternativ kann aber auch eine, von einem distanzmessenden Laserpointer bestimmte Distanz genutzt werden. Damit kann bei Anwendung einer erfindungsgemäßen Zieltafel allein aus dem Bild der Messkamera die Richtung der Laserstrahlung des Laserpointers bestimmt werden.

In einer Ausführungsform kann die Ablenkeinheit dabei motorisch bewegt werden, vorzugsweise kann automatisch entsprechend einer Bilderkennung der Bodenmarke in Bild der Messkamera den Laserpointer automatisch auf die Bodenmarke ausgerichtet werden. In einer alternativen Ausführungsform kann die Ablenkeinheit auch manuell vom Benutzer bewegt werden, beispielsweise über Hebel oder Stellräder.

In einer Ausführungsform dieses Laserpointers kann dieses als distanzmessender Laserpointer ausgebildet sein, mit dessen Laserstrahlung eine elektrooptische Distanzmessung zu einem Auftreffpunkt der Laserstrahlung durchführbar ist, beispielsweise in Form eines elektrooptischen Laser-Distanzmessers.

Dabei kann die Verortungseinheit derart ausgebildet sein, dass diese unter zusätzlichem Einbezug der Distanzinformation von der elektrooptischen Distanzmessung und/oder mit der Ablenkinformation von der Ablenkeinheit, die Verortung durchführt bzw. berechnet.

In einer weiteren Ausführungsform dieses optional distanzmessenden Laserpointers kann dieser als Laserlot ansteuerbar sein, wobei eine Lotrichtung von dem in der unteren Montageplatte eingebauten Neigungssensor zur Ausrichtung der Strahlrichtung verwendet werden kann.

Das Modul entsprechend der Erfindung kann dabei speziell als Tribrach ausgebildet sein, insbesondere mit einer, zwei oder drei manuell justierbaren Stellschrauben zur Nivellierung oder Horizontierung eines montierten Vermessungsgeräts durch eine Verstellung der oberen Montageplatte des Moduls gegenüber der unteren Montageplatte des Moduls. Dabei kann die Tribrach-Einrichtung speziell derart ausgebildet sein, dass eine Höhe eines Pivotpunktes des Moduls gegenüber der unteren Montageplatte beim Stellen der Stellschrauben unverändert bleibt. Beispielsweise kann eine Lagerung über eine Kugelkalotte erfolgen.

In einer speziellen Ausführungsform kann die Verortungseinheit derart ausgebildet sein, dass diese anhand einer bereitgestellten oder vom Modul selbst ermittelten Grob-Position eines aktuellen Standorts des Moduls, eine lokale- oder Cloud-Datenbank von Bodenmarkierungen am oder um den aktuellen Standort abgefragt wird. Anhand der Datenbank wird dann automatisch ein äußeres Koordinatensystem der Bodenmarke am aktuellen Standort zugeordnet. Eine Ermittlung der Grob-Position kann dabei z.B. mittels eines GNSS oder GPS-Empfängers im Modul, im Vermessungsgerät oder in einer externen Bedieneinheit erfolgen.

Die Verortungseinheit des Moduls kann in einer Ausführungsform derart ausgebildet sein, dass eine vorzugsweise automatische, auf einem Bilderkennungsalgorithmus und/oder künstlicher Intelligenz basierende exakte Fein-Anzielung des Laserpointers auf den Bodenpunkt erfolgt, insbesondere mit einer automatischen Erfassung eines Auftreffpunkts der Laserstrahlung des Laserpointers im Bild der Messkamera-Einheit. Dabei kann der Laserpointer als distanzmessender Laserpointer ausgebildet sein, welches eine Schrägdistanz zwischen dem Modul und der Bodenmarke ermittelt, aus welcher Schrägdistanz gemeinsam mit Messwerten des Neigungssensors, einer Lage der Bodenmarke im Kamerabild und/oder einer Ablenkungsrichtung der Ablenkeinheit von der Verortungseinheit eine vertikale Normalhöhe des Moduls über der Bodenmarke ermittelt wird.

Eine Ausführungsform des erfindungsgemäßen Moduls kann dabei optional auch einen elektronischen Kompass aufweisen, insbesondere zur magnetischen oder gyroskopischen Azimutalausrichtungsbestimmung gegenüber Norden. Dabei kann die Verortungseinheit derart ausgebildet sein, dass diese bei der Verortung eine Azimutalinformation vom elektronischen Kompass miteinbezieht.

Das Vermessungsgerät kann dabei speziell ein Theodolit, ein Tachymeter, eine Totalstation, ein Laserscanner, ein Lasertracker, ein GNSS-Empfänger, ein Nivellier oder ein Rotationslaser sein. Das Stativ kann eine Aufstelleinrichtung sein, welche beispielsweise als ein Dreibein, ein Vermessungsstativ, ein Klemmstativ, ein Messpfeiler oder eine fixmontierte Vermessungskonsole sein.

In anderen Worten kann eine Ausführungsform entsprechend der Erfindung ausgebildet sein als ein intelligentes Tribrach-Modul für ein Vermessungsgerät, welches ausgebildet ist um als Zwischenlage zwischen einer Aufstelleinrichtung und dem Vermessungsgerät montiert zu werden, mit einer unteren Montageplatte zur zumindest temporären Befestigung des Tribrach Moduls an der Aufstelleinrichtung und einer oberen Montageplatte zur zumindest temporären Befestigung des Vermessungsgeräts oder einer Schnellmontageeinrichtung für dieses. In einem Gehäuse des Moduls befindet sich dabei zumindest eine in Richtung Boden ausgerichtete Messkamera-Einheit so ein Neigungsmesser, gemeinsam mit einer Energieversorgung und einer Verortungseinheit, welche ausgebildet ist um Basierend auf einer Bilderkennung eines Bilds der Messkamera und Messwerten vom Neigungssensor eine Verortung gegenüber einer, von Bild der Messkamera erfassten Bodenmarke zu berechnen, und diese Verortung über eine Kommunikationsschnittstelle des Moduls dem Vermessungsgerät bereitzustellen.

Die vorliegende Erfindung betrifft dabei auch eine entsprechende Zieltafel, ausgebildet zur im wesentlichen horizontalen Auflage auf einer Bodenmarke, welche insbesondere zur Verwendung mit einem erfindungsgemäßen Modul ausgebildet ist. Diese kann z.B. als flache Platte ausgebildet sein, welche auf den Boden gelegt oder fixiert werden kann. Eine derartige Zieltafel weist dabei zumindest ein visuell erfassbares Kontrastmuster bekannter absoluter Dimension auf, insbesondere wobei diese Dimension auf der Zieltafel angegeben oder Codiert sein kann. Die Zieltafel weist zudem einer Einrichtung zur Positionierung der Zieltafel über einer Bodenmarke auf, insbesondere ausgebildet als ein im Wesentlichen zentrisches Loch oder transparentes Fenster, welches zur Positionierung über der Bodenmarke ausgebildet ist, optional mit einem Fadenkreuz der dergleichen im Loch oder Fenster.

Eine Ausführungsform einer derartigen Zieltafel kann zusätzlich einen Magnetnadelkompass in der Ebene der Zieltafel aufwiesen, welcher zur nordreferenzierten Azimutal-Ausrichtungsbestimmung der Zieltafel ausgebildet ist. Dabei muss erfindungsgemäß nicht zwingend die Zieltafel an sich über der Bodenmarke nach Norden ausgerichtet werden, sondern es kann erfindungsgemäß alternativ auch ein Messwert des Magnetnadelkompasses in der Bilderinformation der Messkamera abgelesen bzw. ausgewertet werden, während sich die Zieltafel in beliebiger Azimutal-Ausrichtung befindet. Der Magnetnadelkompass kann dabei in seiner visuellen Ausbildung speziell zur Ablesbarkeit mit einer Kamera ausgebildet sein.

Eine Ausführungsform einer derartigen Zieltafel kann zusätzlich eine Dosenlibelle oder zwei orthogonalen Röhrenlibellen in der Ebene der Zieltafel aufweisen, welche zur Horizontalausrichtungsbestimmung der Zieltafel ausgebildet sind. Dabei muss erfindungsgemäß nicht zwingend die Zieltafel an sich über der Bodenmarke Horizontal ausgerichtet werden, sondern es kann erfindungsgemäß alternativ auch ein Messwert der Libelle in einem, von einer Messkamera-Einheit erfassten Bild der Zieltafel automatisiert abgelesen bzw. ausgewertet werden. Die Libelle kann dabei in ihrer visuellen Ausbildung speziell zur Ablesbarkeit mit einer Kamera ausgebildet sein. Ebenfalls ist eine Zieltafel mit einem bekannten Kombi-Instrument, welches eine Dosenlibelle und einen Kompass in einem ausbildet, eine alternative erfindungsgemäße Ausführungsform.

Eine Ausführungsform der Erfindung kann auch als ein System aus einem erfindungsgemäßen Modul und einer erfindungsgemäßen Zieltafel ausgebildet sein.

Eine Ausführungsform der Erfindung kann ebenfalls ein System, bestehend aus einem Stativ mit einem integrierten Modul entsprechend der vorliegenden Erfindung betreffen, Vorzugsweise in Form einer integrierten Einheit. Ebenso kann eine Ausführungsform der Erfindung ein System bestehend aus einem Stativ, einem erfindungsgemäßen Modul und einem Vermessungsgerät betreffen, optional mit einer zusätzlichen, externen Bedieneinheit.

Die verschiedenen Ausführungsformen der Erfindung können dabei auch als System bestehend aus einer der Ausführungsformen des erfindungsgemäßen Moduls und einer Zieltafel ausgebildet sein, welche Zieltafel einen visuelles Muster aufweist sowie einen, vorzugsweise im Wesentlichen zentral an der Zieltafel angeordneten, Ausschnitt oder ein zumindest teilweise transparentes Fenster aufweist, welcher derart ausgebildet ist um, vorzugsweise zentral, auf die Bodenmarke gelegt zu werden um diese im Bild der Messkamera zu markieren und/oder entsprechend des visuellen Musters durch Bildverarbeitung vermessbar zu machen. Entsprechend betrifft die Erfindung auch eine derart ausgebildete Zieltafel zur Markierung eines Bodenpunkts, welche ein visuelles Kontrastmuster und einen Ausschnitt oder ein Sichtfenster zur Auflegung auf den Bodenpunkt aufweist, insbesondere wenn diese Zieltafel zur Verortung mit einem erfindungsgemäßen Modul ausgebildet ist. Die Zieltafel zur Markierung eines Bodenpunkts kann neben eines für die Kamera bestimmten Musters auch mit einem Kompass, z.B. mit einem klassischen Magnetnadelkompass, bestückt sein, sodass sowohl Muster als auch eine Kompass-Richtung im Bild der Kamera einsehbar sind. Beispielsweise kann dabei direkt aus dem Kamerabild:
▪ anhand der bekannten Dimensionen des Musters und dessen Skalierung im Kamera-Bild eine Höhenmessung zwischen Zieltafel und Kamera mittels der Kamera erfolgen,
▪ anhand einer relativen Lage des Musters im Kamera-Bild eine Messung eines lateralen Versatzes gegenüber der Zieltafel erfolgen,
▪ anhand einer relativen Ausrichtung des Musters im KameraBild eine Messung einer Ausrichtung gegenüber der Zieltafel erfolgen,
▪ anhand eines Bilds eines Messwerts des Kompasses an der Zieltafel, z.B. anhand einer im Bild sichtbaren Ausrichtung einer Kompassnadel, eine Bestimmung einer absoluten Nordrichtung erfolgen.

Optional kann die Zieltafel auch mit einer Neigungsmesseinrichtung, z.B. Dosenlibelle (oder einer oder mehreren Röhrenlibellen), an der Zieltafel ausgebildet sein und anhand eines Bilds einer Lage einer Libellenblase eine Neigungsinformation bestimmt werden, welche sich insbesondere zusammen mit einer perspektivischen Verzerrung des Musters weiter auswerten lässt.

Ebenso betrifft die vorliegende Erfindung ein Verfahren zur Verortung eines Vermessungsgeräts, welches auf einem Stativ über einer Bodenmarke stationiert wird, insbesondere mit einem erfindungsgemäßen eigenständigen Modul zwischen dem Stativ und dem Vermessungsgerät. Das Verfahren weist dabei zumindest ein Aufnehmen eines Bilds des Bodens unter dem Stativ mit einer Messkamera im Modul, ein Identifizieren eines Bodenpunkts im Bild und ein Vermessen des Bodenpunkts im Bild, und ein Erfassen eines Neigungswerts des Moduls in zumindest zwei Achsen in Bezug auf eine Horizontal oder Vertikalrichtung mit einem Neigungssensor im Modul auf. Dabei kann insbesondere das Bild der Messkamera-Einheit mit einem elektronischen Bildverarbeitungsverfahren und/oder einem künstliche-Intelligenz-Algorithmus zumindest teilweise automatisch ausgewertet werden und die Bodenmarke oder eine diese markierende bekannte Zieltafel in Bildkoordinaten, Größe und/oder Proportionen vermessen und ausgewertet werden. Das erfindungsgemäße Verfahren umfasst weiter ein Berechnen einer zumindest teilweisen Verortung des Moduls in Bezug auf die Bodenmarke, basierend auf zumindest der Vermessung des Bodenpunkts im Bild und des Neigungswerts, durch eine Verortungseinheit im Modul, und einem direkten oder indirekten, vorzugsweise kabellosen Kommunizieren der Verortung und/oder der der für die Verortung vom Modul ermittelten Rohdaten an das Vermessungsgerät, mittels einer Kommunikationseinheit im Modul.

Eine Ausführungsform des Verfahrens kann dabei zudem ein Vermessen einer Schrägdistanz vom Modul zum Bodenpunkt umfassen, welches mit einem, durch eine Ausrichteinheit auf den Bodenpunkt ausrichtbaren entfernungsmessender Laserpointer erfolgt. Diese Schrägdistanz kann dann in der Verortung mit einbezogen werden, insbesondere mit einem Berechnen einer vertikalen Normalhöhe des Moduls über dem Bodenpunkt basierend auf der Schrägdistanz und der Neigungsinformation, und/oder einem Berechnen eines horizontalen Lateralversatzes einer Vertikalachse des Moduls gegenüber dem Bodenpunkt. Das Verfahren kann zudem ein Ermitteln einer azimutalen Kompassausrichtung mit einer Kompass-Einheit im Modul umfassen, welche azimutale Kompassausrichtung in der Verortung mit einbezogen wird.

In einer Ausführungsform des erfindungsgemäßen Verfahrens kann dabei auch ein Markieren der Bodenmarke mit einer Zieltafel erfolgen, welche Zieltafel mit bekannten visuellen Merkmalen derart ausgebildet ist, dass mit dem Vermessen der visuellen Merkmale im Bild der Messkamera eine Relativlage zwischen Messkamera und der Bodenmarke in zumindest drei Freiheitsgraden ermittelbar ist, und wobei die Verortung des Moduls vollständig oder zumindest teilweise basierend auf dieser Relativlage erfolgt. Umfasst die Zieltafel zusätzlich einen Kompass, so ist die Kamera in der Lage die Verortung bezüglich magnetisch Nord und damit Kartennord zu komplettieren.

Ein erfindungsgemäß angewendetes Modul kann dabei speziell aufweisen:
▪ eine Messkamera zur Aufnahme des Untergrunds der Aufstellung und eines Bodenpunkts am Untergrund zur Referenzierung der Aufstellung in einem äußeren Koordinatensystem, sowie
▪ einen Neigungssensor mit zumindest zwei, vorzugsweise im wesentlichen orthogonalen Messachsen.

Optional kann das Modul auch
▪ ein Laserpointer oder Laserlot zur Anzielung und/oder Vermessung des Bodenpunkts, und/oder
▪ ein magnetisches oder gyroskopisches elektronisches Kompass-Modul aufweisen.

Zudem kann optional eine Zieltafel hinzugenommen werden, welche ein vermasstes Muster aufweist, sodass die Messkamera direkt aus dem Kamerabild die Schrägdistanz und mit den Neigungsinformationen des Neigungssensors den in gravitativer Richtung definierten Vertikalabstand bestimmen kann. Bei einer weiteren Ausführungsform der Zieltafel ist ein magnetischer Kompass in der Ebene in die Zieltafel eingebracht, so dass die Kamera direkt die Nordrichtung feststellen kann, oder das erfindungsgemäße Modul weist hierfür einen internen elektronischen Magnetkompass auf. Bei widrigen Lichtverhältnissen kann dabei das Modul optional auch mit einer Beleuchtungseinrichtung, z.B. einer Weißlicht-LED-Beleuchtung oder einem Blitzlicht, ausgebildet sein, welche bei Bedarf das Blickfeld der Messkamera ausreichend ausleuchtet. Ein exemplarisches Beispiel eines Arbeitsablaufs oder Workflows bei der Aufstellung eines Vermessungsgeräts kann in anderen Worten etwa wie folgt ablaufen:
▪ Ein Stativ mit dem erfindungsgemäßen Modul und dem Vermessungsgerät wird grob über einem als Referenz zu Nutzenden Bodenpunkt aufgestellt. Bei der Aufstellung des Stativs erfolgt dabei eine manuelle, im Rahmen der von Benutzer ohne exakte externe Hilfsmittel und ohne Feineinstellungen und ohne großem Zeitaufwand gegebenen Möglichkeiten erzielbare, Zentrierung angestrebt. In anderen Worten stellt der Benutzer das Stativ mit erfindungsgemäßem Modul und Vermessungsgerät per Augenmaß über den gewünschten Bodenpunkt, wobei durchaus Abweichungen von einer exakten Zentrierung im Zentimeter oder Dezimeterbereich auftreten können.
▪ Eine Messkamera im erfindungsgemäßen Modul nimmt dann ein Bild von Boden auf. Dabei kann das Modul optional auch mit einer Beleuchtungseinrichtung, z.B. einer Weißlicht-LED Beleuchtung oder einem Blitzlicht, ausgebildet sein, welche das Blickfeld der Messkamera beleuchtet, speziell um auch bei widrigen Umgebungslichtverhältnissen ein hinreichend gutes Bild von der Messkamera zu erhalten. Neben dem Sichtbaren Spektralbereich, kann die Messkamera alternativ oder zusätzlich auch einen nichtsichtbaren Bereich erfassen.
▪ Das Bild der Kamera wird am Vermessungsgerät und/oder auf einer externen Bedieneinheit (wie z.B. einem Tablet-PC, Smartphone, Laptop, etc.) angezeigt. Der gewünschte Bodenpunkt kann dabei im Bild automatisch (beispielsweise mittels Bilderkennungssoftware) erkannt und markiert werden, manuell in Bild selektiert oder gepickt und markiert werden, oder semiautomatisch mit einer Mischung aus automatischer und manueller Markierung ausgewählt werden. Die Koordinaten des Bodenpunkts sind im lokalen Koordinatensystem des Blickfelds der Kamera und somit auch im lokalen Koordinatensystem des erfindungsgemäßen Moduls nun bekannt.
▪ Ein Laserpointer, Laserlot oder Laser-Plummet des erfindungsgemäßen Moduls richtet nun seinen Laserstrahl auf den gewählten Bodenpunkt aus. Beispielsweise kann ein kleiner Spiegel die optische Achse des Laserstrahls gegenüber dem erfindungsgemäßen Modul schwenken. Ein solches schwenken kann dabei vorzugsweise mit einem motorischen Antrieb erfolgen, in einer reduzierten Ausführungsform aber optional auch durch manuell von Benutzer zu bedienende Stelleinheiten. Optional kann dabei die Ausrichtung des Laserpointers auf den Bodenpunkt im Bild der Kamera oder durch direkte Beobachtung des Lichtflecks am Boden durch den Benutzer überprüft werden. Insbesondere kann eine exakte Anzielung des Bodenpunkt mit dem Laserstrahl zum mittels Kamerainformation durchgeführt werden. Dabei wird eine Richtung der Ablenkung von einer Auswerteeinheit erfasst, vorzugsweise mit einer Auswertung einer Lage des Auftreffpunts des Laserstahls im Bild der Kamera, optional aber auch durch Erfassung der Lage der Ablenkeinheit mit einem entsprechenden Encoder oder Sensor.
▪ Der Laserpointer oder das Laserlot ist dabei als elektrooptischer Entfernungsmesser (EDM, Rangefinder) ausgebildet, mit welchem eine Schrägdistanz zwischen dem erfindungsgemäßen Modul und dem Bodenpunkt ermittelbar ist. Das Bestimmen der Distanz kann dabei mittels des vorzugsweise sichtbaren Laserstrahls des Laserpointers erfolgen, beispielsweise über ein Laufzeit- und/oder Phasenmessprinzip, etwa wie EP 1 882 959, EP 2 680 028, EP 3 070 494, EP 3 324 203 oder anderen beschrieben.
▪ Unter Einbezug von Neigungsdaten von einem zumindest zweidimensionalen Neigungssensor (z.B. einem MEMS-Beschleunigungssensor oder anderem) im erfindungsgemäßen Modul kann aus der gemessenen Schrägdistanz eine vertikale Höhe des Bodenpunkts zu einem Höhenbezugspunkt (insbesondere dem Pivotpunkt) des erfindungsgemäßen Moduls (z.B. der oberen Montageplatte), als Stationierungshöhe bestimmt werden.
▪ Optional kann dabei auch, z.B. falls der mit dem Laserpointer kombinierte Distanzmesser die Schrägdistanz nicht ausreichend genau erfassen kann (etwa bedingt durch Schmutz, Wasser, Reflexionen, Umgebungslicht, etc....) oder diese Option als komfortabler erachtet wird, eine Markiertafel zentrisch auf den Bodenpunkt gelegt werden. Anhand einer solchen, in ihrer geometrischen Ausführung und Markierung bekannten Markiertafel kann mit dem Bild der Kamera alleine, anhand des bekannten Musters auf der Markiertafel, sowohl Distanz, Höhe, Länge und Breite im lokalen Koordinatensystem des erfindungsgemäßen Moduls ausgewertet werden. Daraus kann mit dem eingebauten Neigungsoder Tilt-Sensor wiederum die Höhe in Lotrichtung bestimmt werden. Dabei ist der relative Offset zum Bodenpunkt im äußeren Koordinatensystem vorerst nur als Radius definiert.
▪ In einer Ausführungsform des erfindungsgemäßen Moduls mit einem optionalen Kompasssystem, beispielsweise einer magnetischen- oder gyroskopischen elektronischen Kompasseinheit, kann auch diese Information erfasst werden, sodass die Aufstellung des Vermessungsgeräts in einem äußeren Koordinatensystem bereits in bis zu sechs Freiheitsgraden bestimmt ist, ohne dass dazu Messungen durch das Vermessungsgerät an sich vorgenommen werden mussten. Somit können die vollständigen Standpunktkoordinaten (E,N,H) ermittelt werden, wobei E = east, N = north, H = height die Verortung des Vermessungsgeräts in einem äußeren Referenzkoordinatensystem oder globalen Koordinatensystem angeben, zu welchem über den Bodenpunkt Bezug genommen wird. Optional kann die Zieltafel selber eine stromlose magnetische Kompasseinheit aufweisen, wobei die Kompassnadel von der Kamera einsehbar ist, so dass im Bild direkt die Nordrichtung bestimmbar ist.
▪ Bei einer ersten Ausführungsform mit einem auf dem erfindungsgemäßen Modul aufgesetzten, manuellen Tribrach zwischen dem erfindungsgemäßen Modul und dem Vermessungsgerät kann nun noch das Vermessungsgerät vertikal einjustiert werden um das noch fehlende Leveling des Vermessungsgeräts zu erzielen. Das Vermessungsgerät kann dann allenfalls noch mittels eines Kompass oder mit einem Anmessen von Fixpunkten in der Umgebung die azimutale Nordausrichtung exakt bestimmt werden. Über eine drahtlose Kommunikation werden die im erfindungsgemäßen Modul ermittelten Messergebnisse und/oder weitere Aufstelldaten dem Vermessungsgerät zur Verfügung gestellt.
▪ Bei einer zweiten Ausführungsform des erfindungsgemäßen Moduls mit einem integrierten Tribrach kann das Vermessungsgerät mit dem integrierten Einstellmechanismus vertikal einjustiert werden um ein Leveling zu erzielen. Die 6-DOF-Bestimmung der Stationierung ist dabei wie oben beschrieben bereits erfolgt. Die 6-DOF-Koordinaten der Stationierung des integrierten Tribrachs beziehen sich dabei z.B. auf die relative Lage des Bodenpunkts zum Pivotpunkt des erfindungsgemäßen Moduls, wobei dieser Pivotpunkt z.B. der axiale Punkt in der Aufstellebene einer Vermessungsgeräte-Aufnahmevorrichtung der oberen Montageplatte des Moduls sein kann.
▪ Das erfindungsgemäße Modul kann dabei optional auch weitere Merkmale und Attribute des Bodenpunkts erfassen. Beispielsweise kann ein Bild des Bodenpunts der Kamera, allenfalls gemeinsam mit den zugehörigen Messwerten erfasst werden. Es können allfällige visuelle Markierungen, Codierungen oder Beschriftungen des Bodenpunkts gespeichert und/oder automatisch ausgewertet werden.
▪ Das erfindungsgemäße Modul kann dann mit einem entsprechenden Kommunikationsinterface (z.B. kabellos über NFC, Bluetooth, WLAN oder ähnlichem) die ermittelten Stationierungsdaten dem Vermessungsgerät, einer externen Bedieneinheit, einem Cloud- oder Fog-Computersystem und/oder einer BIM-Datenbank bereitstellen, welche diese Daten und Bilder optional auch speichern können. Beispielsweise kann das erfindungsgemäße Modul Stationierungsparameter wie Offset (E und N) sowie Höhe (H) in Bezug auf den Bodenpunkt ermitteln und bereitstellen und/oder die zur Bestimmung dieser erforderlichen Rohdaten, welche dann extern vom erfindungsgemäßen Modul laufender Software weiterverarbeitet werden. In einer Ausführungsform könnten beispielsweise das erfindungsgemäße Modul sowie das Vermessungsgerät ihre Rohen Messdaten - allenfalls zusammen mit ihren aktuellen Konfigurationsdaten, Umgebungsdaten, etc. - direkt in die Cloud bereitstellen, wobei die Verrechnung auf ein äußeres Referenzkoordinatensystem und/oder weitere Auswertungen dann extern von einem Cloud-Computer-System durchgeführt werden. Daraus resultierenden Ergebnisse können dem Benutzer allenfalls über das Vermessungsgerät oder ein externes Computersystem bereitgestellt werden. Dabei können vom Cloudsystem etwa zudem automatisierte Dokumentationssysteme, automatisch generierte Reporte, Vernetzungen mit anderen Daten (z.B. einer BIM-Datenbank), automatische Soll-Ist-Vergleiche, künstliche Intelligenzsysteme zur Fehlererkennung und für Plausibilitätsprüfungen, automatisch Gerätekonfigurationen und Kalibrationen, Bereitstellung von spezifischen Benutzerführungen zur Bedienung der Geräte, Fernsteuerung der Geräte durch Software am Cloud-Rechner oder durch von diesem bereitgestellte Software-Komponenten, Parameter oder Messabläufe, Fernsteuerung der Geräte oder Unterstützung bei der Gerätebedienung durch externe, nicht Vorort präsente Fachpersonen, etc. durchgeführt werden.

Über dieses Kommunikationsinterface kann dabei auch die eine Steuerung, Konfiguration, Kalibrieren und Parametrieren, des erfindungsgemäßen Moduls erfolgen, sodass dieses nicht zwingend mit einem lokalen Benutzerinterface ausgebildet sein muss, bzw. dieses auf ein Minimum (wie z.B. einen Einschalter und eine Kontrolllampe) reduziert sein kann. Über das Kommunikationsinterface kann dabei beispielsweise auch das Bild oder Video der Kamera übertragen werden. In einer Ausführungsform kann beispielsweise ein Web- oder ReST-interface, ein JSON, XML, YAML, BLE-GATT (LNP/LNS) datenaustausch, etc.

Die vorliegende Erfindung oder Teile davon könne dabei auch als ein Computerprogrammprodukt mit Programmcode, der auf einem maschinenlesbaren Träger gespeichert ist oder ein Computer-Daten-Signal, verkörpert durch eine elektromagnetische Welle (z.B. in Form einer kabellosen Datenübertragung), zur Durchführung von zumindest Teilen des erfindungsgemäßen Verfahrens. Dabei kann der Programmcode speziell jene Schritte aufweisen, welche ein Ansteuern von Sensoren und/oder Aktoren, Verarbeiten und Berechnen von Messwerten und Ergebnissen, Bereitstellen von Bedienoberflächen und/oder APIs durchführen. Dieses gilt speziell, wenn der Programmcode in einem Teilnehmer des Messsystems aufgeführt wird.

Das erfindungsgemäße Verfahren und die erfindungsgemäße Vorrichtung werden nachfolgend anhand von, in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:
Fig. 1 ein erstes Beispiel einer Ausführungsform eines erfindungsgemäßen Moduls bei einer Vermessung;
Fig. 2 zwei Ausführungsformen von erfindungsgemäßen Modulen in deren Anwendung;
Fig. 3 ein erstes Beispiel einer Ausführungsform und Funktionalität eines Moduls entsprechend der vorliegenden Erfindung;
Fig. 4 ein zweites Beispiel einer Ausführungsform und Funktionalität eines Moduls entsprechend der vorliegenden Erfindung;
Fig. 5 ein Beispiel zur Erläuterung einer Ausführungsform und Funktionsvariante eines erfindungsgemäßen Moduls;
Fig. 6 eine Illustration eines Beispiels einer Funktionsvariante aus Fig. 5 bei einer Aus-führungsform eines erfindungsgemäßen Moduls;
Fig. 7 eine weiterführenden Ausführungsform und Ausführungsvariante der vorliegenden Erfindung;
Fig. 8 eine Darstellung von beispielhaften Komponenten in einer ersten Ausführungsform der Erfindung;
Fig. 9a, 9b und 9c eine Darstellung von beispielhaften Varianten einer zweiten Ausführungsform der Erfindung;
Fig. 10 ein Blockdiagramm eines Beispiels einer erfindungsgemäßen Ausführungsform einer Methode zur Stationierung entsprechend der vorliegenden Erfindung.

Die Darstellungen in den Figuren dienen lediglich zur Illustration und sind, sofern nicht explizit angegeben, nicht als exakt maßstäblich zu betrachten. Gleiche oder funktionell ähnliche Merkmale sind, insoweit praktikabel, durchgängig mit denselben Bezugszeichen versehen und werden gegebenenfalls mit einem Buchstaben als Index unterschieden. Die dargestellten Schemata zeigen jeweils die technische Grundstruktur, welche von einem Fachmann entsprechend allgemeinen Grundsätzen ergänzt oder modifiziert werden können. Die Ausdrücke "im Wesentlichen" oder "substantiell" bringen zum Ausdruck, dass ein Merkmal im Sinne der Erfindung nicht zwingend zu 100% exakt erfüllt sein muss, sondern, dass auch kleinere Abweichungen auftreten können, speziell derart, dass die technische Wirkung des Merkmals im Sinne der Erfindung erhalten bleibt und/oder im Rahmen von erwartbaren Toleranzen und Ungenauigkeiten in der Ausführung oder Fertigung.

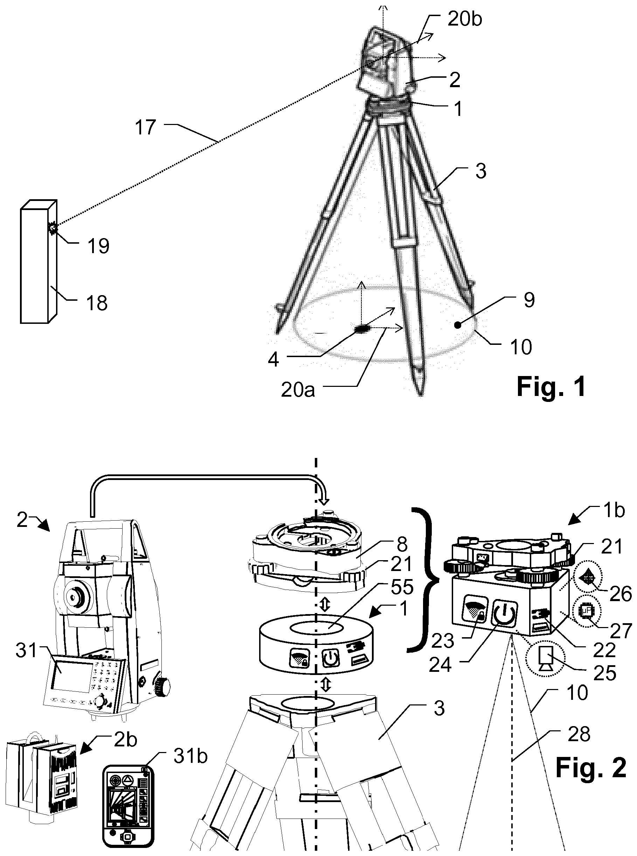

**Fig. 1** zeigt schematisch ein Beispiel einer Ausführungsform einer Stationierung eines mobilen Messgeräts 2 für eine Vermessungsaufgabe, etwa in der Geodäsie, auf einer Baustelle, etc. Darin wird ein Vermessungsgerät 2 meist nur temporär mit einem Stativ 3 oder einem anderen Gestell im Feld aufgestellt um eine Vermessungsaufgabe durchzuführen, z.B. für eine Ist-Bestandsaufnahme oder zum Ermitteln, Ausstecken und/oder Markieren von Soll-Positionen oder Ausrichtungen.

Im gezeigten Beispiel ist das Vermessungsgerät 2 als eine Totalstation ausgebildet, welche in Bezug auf ein Vermessungsgeräte-Koordinatensystem 20b eine Messung auf einen oder mehrere Messpunkte 19 an einem oder mehreren Objekten 18 oder einem Reflektor durchführt, indem diese Messpunkte 19 mit einer Laser-Zielachse 17 einer elektrooptischen Entfernungs- oder Distanzmessung (EDM) mittels beweglicher Geräteachsen des Vermessungsgeräts 2 angezielt werden. In anderen Ausführungsformen kann das Vermessungsgerät 2 aber auch anders ausgebildet sein, z.B. als Theodolit, Tachymeter, Laserscanner, Lasertracker, GNSS-Empfänger, Nivellier- oder Rotationslaser, etc. und/oder dabei auch andere Messprinzipien zur Bestimmung eines Messpunks 19 verwenden.

Um dabei einen Bezug zu einem äußeren Koordinatensystem 20a herzustellen, muss das Vermessungsgerät 2 gegenüber diesem verortet werden, das heißt es muss ein bekannter Bezug zwischen dem Vermessungsgeräte-Koordinatensystem 20b und dem äußeren Koordinatensystem 20a hergestellt werden bzw. muss dieser Bezug in dimensionalen Einheiten ermittelt werden. Wie im gezeigten Beispiel wird eine derartige Verortung vielfach über markierte Bodenpunkte 4 hergestellt, beispielsweise Vermessungsmarker, Farbmarkierungen, Einschlaganker, Bodenpflöcke, etc. Das Vermessungsgerät 2 wird dabei über dem Bodenpunkt 4 stationiert, also z.B. mit dem Stativ 3 aufgestellt. Dabei wird ein geometrischer Bezug zum Bodenpunkt 4 vermessen, beispielsweise mit zumindest einer vertikalen Höhe sowie eines zweidimensionalen horizontalen Versatzes der Lotrechten des Vermessungsgeräts 2. Dabei ist es insbesondere nichtmehr zwingend erforderlich, eine exakte physikalische Stationierung des Vermessungsgeräts 2 über dem Bodenpunkt 4 herzustellen, bei welcher eine Lotrechte des Vermessungsgeräts 2 exakt durch den Bodenpunkt 4 verläuft. In anderen Worten ist die Verortung äquivalent zu einer Transformation in 6 Freiheitsgraden (6 DOF) zwischen einem Bodenpunkt 4 und dem Pivotpunkt als Nullpunkt des lokalen Koordinatensystems des Vermessungsgeräts 2. Die Winkelausrichtungen der Verortung sind dabei durch das gravitative Lot und beispielsweise durch das Azimut zur Nordrichtung festgelegt.

In einer erfindungsgemäßen Ausführungsform befindet sich dabei zwischen dem Stativ 3 und dem Vermessungsgerät 2 ein erfindungsgemäßes, eigenständiges Modul 1. Dieses erfindungsgemäße Modul 1 ist dabei derart ausgebildet, um eine Verortung des Vermessungsgeräts 2 bezüglich des Bodenpunkts 4 herzustellen, also Abmessungen zwischen diesen beiden zu ermitteln, bzw. stellt das erfindungsgemäße Modul 1 ein Hilfsmittel für eine derartige Verortung dar. Das zwischengesetzte erfindungsgemäße Modul 1 definiert dabei einen neuen, weiteren für die Verortung relevanten Pivotpunkt des erfindungsgemäßen Moduls 1, welcher in einem bekannten Höhenabstand zum Pivotpunkt des Vermessungsgeräts 2 steht. Der Pivotpunkt des Vermessungsgeräts 2 ist dabei üblicherweise der Schnittpunkt zwischen Kippachse, Stehachse und Zielachse des Vermessungsgeräts 2. Bei senkrechter Aufstellung, (was immer angenommen wird,) befindet sich der Pivotpunkt des Moduls 1 vorzugsweise genau senkrecht unterhalb des Pivotpunkt des Vermessungsgeräts 2 in einem bekannten Abstand. Da das Modul 1 eigenständig ist, also nicht zwingend fixer Bestandteil des Vermessungsgeräts 2 oder des Stativs 3, kann dieses z.B. auch einfach nachgerüstet und/oder mit unterschiedlichen Vermessungsgeräten 2 und/oder Stativen 3 genutzt werden. Eigenständig kann dabei speziell auch bedeuten, dass das Modul 1 in sich geschlossen ist und vorzugsweise ohne weitere externe Komponenten betriebsbereit ist, also insbesondere z.B. über eine interne Energieversorgung verfügt und über eine Kommunikations- und/oder Bedienschnittstelle seine Funktion ausführen kann. Das Modul 1 kann speziell ein eigenständig verkehrsfähiges, abnehmbares Gerät sein, welches weder integraler Bestandteil des Stativs 3 noch des Vermessungsgeräts 2 ist. Beispielsweise kann über eine kabellose Datenschnittstelle eine Bedienung der Funktionalitäten des Moduls 1 von einer externen Bedieneinheit erfolgen, speziell etwa über eine Bedieneinheit des Vermessungsgeräts 2 und/oder eines externen Computers, Tablet-PCs oder Smartphones, etc.

Das Modul 1 weist dabei eine Bildaufnahmeeinrichtung oder Messkamera 25 auf, deren Blickfeld 10 in montiertem Zustand, also in Gebrauchslage des Moduls 1, in Richtung Boden 9 unter dem Stativ 3 gerichtet ist, also insbesondere derart ausgerichtet ist, um einen Bodenpunkt 4 unter dem Stativ 3 in einem zweidimensionalen Bild zu erfassen.

Einige Details von exemplarischen Ausführungsformen eines erfindungsgemäßen Moduls 1, sowie Beispiele deren Aufbau, Anordnung und Verwendung, sind in **Fig. 2** gezeigt.

Im Beispiel einer speziellen Ausführungsform eines Moduls 1b entsprechend der vorliegenden Erfindung, kann dieses auch in seiner mechanischen Bauweise ähnlich eines klassischen mechanischen Tribrachs 8 ausgebildet sein, und diesen somit ersetzen - was rechts in der Figur illustriert ist.

Im Beispiel einer anderen speziellen Ausführungsform eines Moduls 1 entsprechend der vorliegenden Erfindung, kann das Modul 1 aber auch ohne die mechanische Nivellier-Funktionen eines Tribrachs 8 ausgebildet sein, also etwa als solides, rigides Modul 1, welches z.B. zwischen dem Stativ 3 und einem klassischen Tribrach 8 angebracht wird - was in der Mitte der Figur illustriert ist.

In einer minimalen erfindungsgemäßen Ausführungsform kann ein erfindungsgemäßes Modul 1 als Sensoren in dessen Gehäuse beispielsweise nur eine digitale Messkamera 25 und einen Neigungssensor 26, beispielsweise in Form eines 2D-Tilt-MEMS, mit einer Messgenauigkeit im Winkelsekundenbereich oder darunter aufweisen. Neben diesen Sensoren ist dabei auch eine Energieversorgung 22 (z.B. in gezeigter Form einer vorzugsweise wiederaufladbaren Batterie), eine Kommunikationseinheit 23 (z.B. in gezeigter Form eines Bluetooth-, WLAN-, Mobilfunk- oder NFC-Funkmoduls) sowie eine Steuereinheit 27 (z.B. in gezeigter Form eines Mikroprozessors oder einer anderen vorzugsweise programmierbaren Rechnereinheit).

Die Messkamera 25 kann dabei speziell ein Kamera-Modul sein, welches in seinen Abbildungs-Eigenschaften bekannt ist, sodass Vermessungen im Bild der Kamera mit hinreichender Genauigkeit durchführbar sind. Dieses kann zum einem mit einer hinreichend präzisen Optik der Kamera-Einheit mit geringen und vorzugsweise bekannten optischen Fehlern, und zusätzliche oder alternativ aber auch mit einer entsprechenden nummerischen Kamera-Kalibrierung der Kamera 25 und deren Abbildungscharakteristiken erfolgen, welche auf das Bild angewandt wird um einen Bezug zwischen den Bildpunkten der Kamera 25 und Orten im Objektraum herzustellen. Insbesondere sollte bei der Auslegung auf Stabilität bzw. Langzeitstabilität der optischen Abbildung Bedacht genommen werden, bzw. kann ein einfach auszuführender, vorzugsweise automatischer (Re-)Kalibriervorgang bereitgestellt werden. Ein einer einfachen Ausführungsform kann die Messkamera in einem erfindungsgemäßen Modul mit einer präzis und stabil gefassten Optik als Fixfokus-Objektiv ausgeführt sein, speziell wobei dieses Objektiv mit einem Schärfebereich hoher Auflösung zwischen 50cm und 5m ausgebildet ist.

In einer Ausführungsform wie hier gezeigt kann die Messkamera 25 dabei als speziell als zentrale Messkamera 25 ausgebildet sein, welche ihr Blickfeld 10 durch das Stativ 3, also z.B. durch eine zentrale Bohrung in einer Herzschraube, mit welcher das erfindungsgemäße Modul 1 auf dem Stativ 3 befestigt werden kann, in Richtung Boden unter dem Stativ 3 gerichtet hat. Allerdings sind bei hohl ausgebildeten Herzschrauben mit den verbreiteten zölligen 5/8 Whitworth-Gewinden, oder metrischen M16×2 oder M16x1.5 Gewinden und mit ihrem Außendurchmesser von unter 16mm, die zentralen Bohrungen oft so klein, sodass diese das Blickfeld einer zentralen Messkamera einschränken können.

In einer später gezeigten und erläuterten Ausführungsform kann das erfindungsgemäße Modul 1 alternativ oder zusätzlich auch eine Messkamera 25 in Form einer dezentralen oder peripheren Messkamera aufweisen.

Das erfindungsgemäße Modul 1 weist dabei eine Einrichtung auf, mit welcher eine Neigung des Moduls 1, in zumindest zwei Achsen bezüglich der Horizontalen respektive der Lotrechten als Neigungswert ermittelbar ist, vorzugsweise als digitaler Messwert mit einer Genauigkeit im Bereich von Winkelsekunden. Ein derartiger interner Neigungssensor 26 ist bei Variante 1b explizit illustriert.

Das erfindungsgemäße Modul 1 weist weiterhin eine Steuereinheit 27, z.B. mit einem programmierbaren Mikrocontroller oder Mikrocomputer auf, welcher ausgebildet ist um Sensoren und/oder Aktoren des Moduls 1 anzusteuern und/oder deren Sensorwerte und Daten zu Verarbeiten. Über eine Kommunikationseinheit 23, z.B. einem Funkmodul nach einem gängigen Standard, kann das Modul 1 mit dem Vermessungsgerät 2 und/oder mit einer externen Bedieneinheit, welche z.B. als eigenständige Bedieneinheit 31b und/oder als im Vermessungsgerät 2 integrierte Bedieneinheit 31 ausgebildet sein kann. Des Weiteren weist das Modul 1 für einen autonomen Betrieb seiner internen Sensoren und Funktionalitäten eine Energieversorgung 22 auf, und kann auch Bedienelemente und Anzeigeelemente wie mit 24 et.al gezeigt, aufweisen.

In erweiterten erfindungsgemäßen Ausführungsformen kann zuvor genanntes erfindungsgemäßes Minimal-Setup mit entsprechenden weiteren und/oder genaueren Sensoren und zusätzlichen Funktionen erweitert werden, insbesondere mit Kombinationen von Teilen der im Folgenden beschriebenen Varianten und Optionen eines erfindungsgemäßen Moduls 1.

Eine weitere (rechts gezeigte) beispielhafte Ausführungsform eines Aufbaus eines Moduls 1b entsprechen der Erfindung, kann dabei auch einen Leveling-Mechanismus 21, insbesondere ähnlich zu einem klassischen Tribrach 8, als integraler Teil des Moduls 1 aufweisen. Im gezeigten Beispiel kann ein Benutzer etwa mit den drei Stellschrauben 21 ein Nivellieren eines auf dem Modul 1b aufgesetzten Vermessungsgeräts 2 oder 2b durchführen. Damit kann diese Ausführungsform quasi als intelligenter, verbesserter Ersatz eines klassischen Tribrach 8 genutzt werden. Speziell bei einer derartigen Integration einer Tribrach-Mechanik 21 im erfindungsgemäßen Modul 1 kann damit eine kompakte Bauform erzielt werden, mit welcher der Benutzer gegenüber früher keine zusätzliche physikalische Komponente mitführen und montieren muss, aber dennoch eine erleichterte Stationierung ermöglicht wird. Zusätzlich kann dabei der Azimutwinkel zwischen Modul 1 und Vermessungsgerät 2 fixiert sein, beispielsweise durch spezielle Auflage- und Positionsbolzen festgelegt sein, vorzugsweise mit einer Winkelgenauigkeit von besser als einer Winkelminute. Die Kalibrierung der Kamera 25 mit deren abbildenden Optik bezieht sich dabei auf das lokale Koordinatensystem des Moduls 1, wobei sich beispielsweise die drei Koordinatenachsen im Pivotpunkt in einer Auflageebene für das Vermessungsgerät 2 kreuzen und der Azimutwinkel (z.B. durch einen Positionsbolzen oder eine Markierung als Interface der Orientierung zum Vermessungsgerät) festgelegt sein kann.

In einem Beispiel einer (rechts illustrierten) Variante einer solchen Ausführungsform kann das Modul 1 dabei weiteres ein einfaches, nichtmessendes Laserlot 28, z.B. in Form eines Laser-Pointers, aufweisen. Dieser Laserpointer 28 kann dabei vorzugsweise derart ausgebildet sein, um durch die Herzschraube des Stativs 3 auf den Boden gerichtet zu sein. In einer Ausführungsform des Laserpointers 28 kann es sich dabei um einen entfernungs- oder distanz-messenden Laserpointer oder Laserstrahlzeiger 28 handeln, mit welchem eine Distanz zwischen Modul und Auftreffpunkt des Lichts des Laserpointer 28 ermittelbar ist.

In einem Beispiel einer anderen (in der Mitte gezeigten) Variante einer solchen Ausführungsform kann das Modul 1 in der Mitte entlang der vertikalen Achse eine freie Öffnung 55 aufweisen, um mit einem im Vermessungsgerät 2 bereits integrierten Laserlot oder distanzmessenden Laserlot oder Lot-Laserstrahl direkt den Auftreffpunkt der Stehachse auf dem Boden anzuzeigen und/oder die Höhe des Vermessungsgeräts 2 über dem Boden zu messen.

In Ausführungsformen, in welchen beide Sensoren, die zentrale Messkamera 25 und das höhenmessendes Laserlot 28 durch die zentrale Anzugsschraube operieren, können die optischen Achsen dieser, z.B. mittels dichroitischem Strahlteiler, übereinander eingespiegelt werden. In einer andere erfindungsgemäßen Variante kann einer der beiden zuvor genannten Sensoren bei Bedarf, z.B. mittels einschwenkbarem Spiegel oder Bewegung zumindest eines der Messkamera 25 oder Laserpointers 28, temporär auf eine gemeinsame Achse eingespiegelt oder bewegt werden, insbesondere wenn Laserpointer 28 und Messkamera 25 nicht gleichzeitig, sondern sequenziell zur Nutzung vorgesehen sind.

In einer erweiterten Ausführungsform kann das erfindungsgemäße Modul 1 dabei auch mit einer Ablenkeinrichtung für den Laserpointer 28 ausgebildet sein, mittels welchem ohne Bewegung des Gehäuses des Moduls 1 ein - auch schräges - Anzielen des Bodenpunkts 4 mit dem Laserpointer 28 durchführbar ist. Die Ablenkeinrichtung kann dabei manuell oder motorisch bewegt werden. In einer spezielle Ausführungsform können dabei Messkamera 25, Laserpointer 28 und Neigungssensor 26, welche dabei gegeneinander fix montiert sind, gemeinsam von der Ablenkeinheit gegenüber dem Gehäuse des Moduls 1 bewegt werden.

Das erfindungsgemäße Modul 1,1b kann dabei insbesondere als eigenständiges Zubehörinstrument zu geodätischen und industriellen Gerätschaften ausgebildet sein, also insbesondere nicht fest in ein Vermessungsgerät 2 oder Stativ 3 integriert. Das erfindungsgemäße Modul 1 ist somit sehr vielseitig und kann für unterschiedliche Vermessungsgerät 2,2b ohne besondere Modifikationen eingesetzt werden, beispielsweise auch für einfachere low-grade TPS oder andere Vermessungsgeräte 2, welche mit einer kompatiblen kabelgebundenen oder vorzugsweise kabellosen Kommunikationsschnittstelle 23 ausgerüstet sind, oder bei denen eine derartige nachgerüstet werden kann.

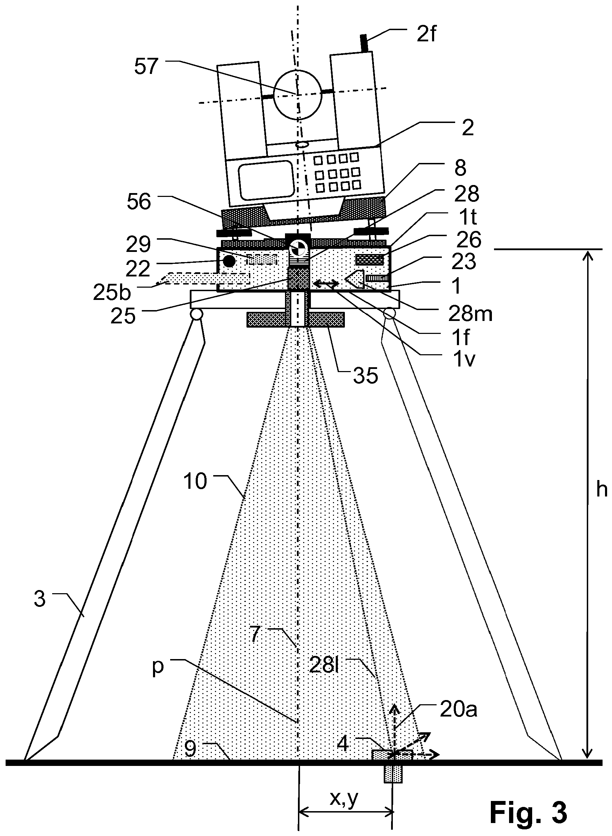

In **Fig. 3** ist nochmals ein Beispiel einer Ausführungsform eines erfindungsgemäßen Moduls 1 gezeigt. Diese ist ausgebildet um, sozusagen als Sandwich-Einheit, zwischen einer klassischen Stativ 3 - Tribrach 8 Anordnung montiert zu werden. Ein Leveling des Vermessungsgeräts 2 kann dabei also weiterhin in bekannter Weise über einen altbekanntes, separates Tribrach Modul 8 auf dem erfindungsgemäßen Modul 1 erfolgen. Das Modul 1 bietet dabei insbesondere die notwendigen Einrichtungen um Lotrichtung p, Offset x,y und Höhe h eines Pivotpunkts 56 über einem Bodenpunkt 4 zu bestimmen, und somit die Verortung des Vermessungsgeräts 2 (bzw. eines Messgeräte-Koordinatensystems 57) in Bezug auf ein äußeres Koordinatensystem 20a zu erleichtern bzw. diesen Bezug herzustellen. Das Stativ 3 kann, muss aber nicht zwingend, dabei auf demselben Boden 9 aufgestellt sein, auf welchem sich der Bodenpunkt 4 befindet.

Das Modul 1 kann dabei derart ausgebildet sein, dass dieses mit seiner unteren Montageplatte 1f über eine zentrale Schraube oder Herzschraube 35 am Stativ 3 befestigt werden kann, insbesondere in gleicher oder ähnlicher Weise, wie klassischerweise der Tribrach 8 direkt auf dem Stativ 3 befestigt wird. Beispielsweise kann dabei die untere Montageplatte 1f ein Innengewinde aufweisen, welches vorzugsweise im Wesentlichen zentral am Modul 1 angeordnet sein kann.

An eine obere Montageplatte 1t des Moduls 1 kann dann der Tribrach 8, insbesondere derselbe Tribrach 8, wie dieser auch ohne erfindungsgemäßes Modul 1 genutzt werden könnte, angebracht werden. Hierfür kann das Modul 1 ebenfalls eine Schraube aufweisen, beispielsweise einen Gewindezapfen oder einen Gewindehohlzylinder an der oberen Montageplatte 1t, welcher vorzugsweise im Wesentlichen zentral am Modul 1 und in Flucht mit dem Innengewinde angeordnet sein kann. Um die azimutale Orientierung des Moduls 1 auf den Tribrach 8 und damit auf das Vermessungsinstrument 2 zu übertragen, kann dabei eine Markierung oder ein mechanischer Anschlag in der oberen Montageplatte vorgesehen sein, sodass die azimutalen Achsen des Modul-Koordinatensystems (z.B. des Pivotpunkts 56) und des Vermessungsgeräte-Koordinatensystems 57 zueinander ausgerichtet sind, vorzugsweise mit einer Genauigkeit in einer Größenordnung von ca. 10 Winkelminuten oder weniger. In Ausführungsformen, in welchen eine Nordrichtung beim Vermessungsgerät 2 und beim erfindungsgemäßen Modul 1 anderweitig bekannt sind, z.B. mittels integriertem Kompass und/oder anzielen bekannter Fixpunkte, kann auf derartige Markierungen oder einen Anschlag allenfalls auch verzichtet werden.

Mit dem Tribrach 8 als Horizontiervorrichtung kann dann das Vermessungsgerät 2 (wie gewohnt) hinreichend horizontal ausgerichtet werden.

Alle Ausführungsformen des erfindungsgemäßen Moduls 1 sind mit mindestens einer Messkamera 25 ausgebildet. Diese Messkamera 25 kann dabei auf der zentralen Achse als zentrale Messkameras 25 platziert sein. Die Messkamera 25, insbesondere deren Abbildungscharakteristik, Montageort und optischer Pfad, kann dabei speziell zur Messung von Relativkoordinaten des erfindungsgemäßen Moduls 1 zum Bodenpunkt 4 ausgebildet und konfiguriert sein. In einer beispielhaften Ausführungsform sollte die Messkamera-Einheit 25 im erfindungsgemäßen Modul 1 etwa derart ausgebildet sein, dass diese den Bodenpunkt 4 bei einem Abstand von ca. 1.5m bis 4m (z.B. als grobe Stativ-Höhe über dem Boden) scharf abbildet und auf ca. 1mm genau in zumindest zwei, vorzugsweise in drei, Dimensionen messen kann.

Dabei kann bei manchen Stativen 3 erschwerend sein, dass das Stativ 3 nur genau in der Mitte eine Öffnung aufweist, durch welche sowohl Kamera 25 und als auch ein, vorzugsweise höhenmessender, Laserpointer 28 freie Sicht zum Boden 9 unter dem Stativ 3 haben müssen. Funktionell limitierend kann dabei die Größe des Blickfelds 10 der Kamera 25 sein, da eine erweiterte zentrale Anzugsschraube 35 im Stativ 3 dabei insbesondere das Blickfeld 10 der Messkamera 25 in seiner Größe limitieren kann, und somit die Freiheit bei der Stationierung relativ zum Bodenpunkt 4 auf dieses limitierte Blickfeld 10 beschränkt ist, was in manchen Konstellationen durchaus akzeptabel sein kann, in anderen (z.B. bei sehr niedrigen Stationierungshöhen, etc.) aber nicht.

Eine Messkamera 25b kann daher in einer anderen Ausführungsform auch seitlich versetzt zum Zentrum als periphere Messkamera 25b platziert sein. Beispielsweise etwa lateral um mindestens ca. 8cm zur Herzschraube 35 versetzt platziert, um neben der Trägerplatte oder Schulter des Stativs 3 freie Sichtlinie zum Boden 9 unter dem Stativ 3 zu gewährleisten. Andere erfindungsgemäße Ausführungsformen können auch mit zwei oder mehr Messkameras 25,25b ausgebildet sein, insbesondere beispielsweise mit einer zentralen Messkamera 25 und zumindest einer peripheren Messkamera 25b im erfindungsgemäßen Modul 1.

Das Modul 1 entsprechend der vorliegenden Erfindung kann die Koordinaten oder Verortung des Moduls 1 über dem Bodenpunkt 4 - bzw. entsprechend umgerechnet jene des darauf montierten Tribrachs 8 oder des Vermessungsgeräts 2 - ermitteln, bzw. die für eine derartige Ermittlung nötigen Rohdaten bereitstellen. Insbesondere kann dabei eine vertikale Stationierungshöhe h des Vermessungsgeräts 2 über dem Bodenpunkt 4, sowie ein lateraler Versatz x,y in zwei Dimensionen zwischen dem Bodenpunkt 4 und einer Steh- oder Vertikalachse oder einer Lotrechten des Vermessungsgeräts 2 ermittelbar sein. Falls eine Verstell-Einheit beim Tribrach 8 nicht derart ausgebildet ist, dass sich dessen Höhe beim Verstellen nicht verändert (wie dies z.B. bei einer Bewegung auf einer Kalotte oder ähnlichem der Fall wäre), so kann - um eine exakter Höheninformation zu erhalten - eine Höhe zwischen Pivot 56 und Pivot 56, bzw. eine allfällige Abweichung an der Verstell-Einheit ermittelt und als Parameter bereitgestellt werden.

Zusammen mit einer Orientierungsinformation gegenüber Norden, welche Orientierung in einer Ausführungsform des Moduls 1 mit einem im Modul 1 integrierten Kompass 29, alternativ aber auch über einen Kompass im auf dem Boden 9 im Gesichtsfeld 10 der Messkamera 25 oder 25a oder über das Vermessungsgerät 2 ermittelbar ist, können Koordinaten des Tribrachs 8 im äußeren Koordinatensystem 20a, in welchem der Bodenpunkt 4 vermessen ist, in bis zu sechs Freiheitsgraden ermittelt werden. Insbesondre kann dabei wie erwähnt die azimutale Orientierung bei der Montage von Vermessungsgerät 2 und Modul 1 referenziert werden, oder jeder der Beiden bestimmt für sich die Nordrichtung, z.B. nach einer der erwähnten Varianten.

Erfindungsgemäß kann also speziell eine relative Lage oder Verortung des erfindungsgemäßen Moduls 1 zu einem beliebigen Bodenpunkt 4 ermittelt werden, bzw. bei entsprechend bekannten Offset-Daten der verwendeten Fixiereinrichtung, auch die relative Lages des am Modul 1 montierten Vermessungsgeräts 2.

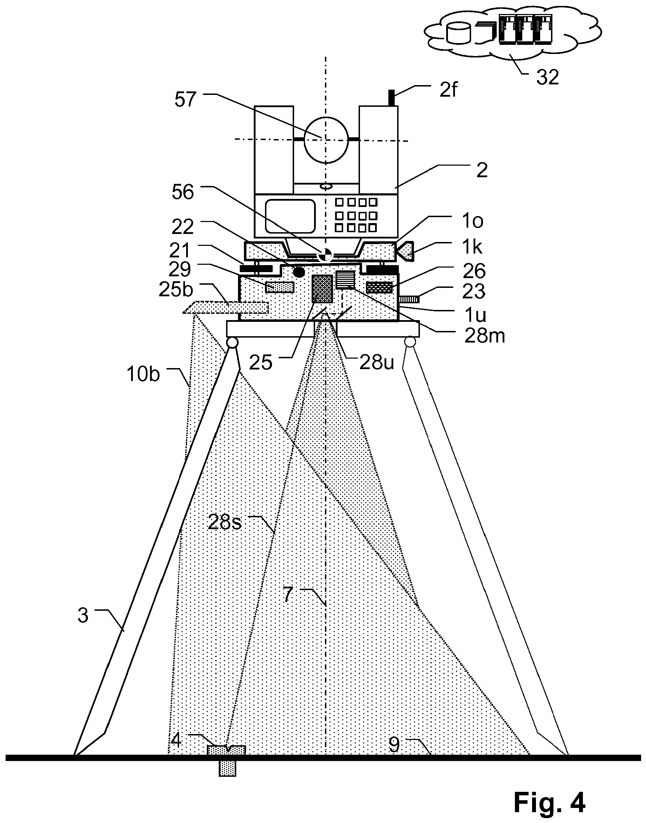

Derartiges kann dabei erfindungsgemäß insbesondere derart erfolgen, dass das Vermessungsgerät 2 hierfür keine speziellen, seine Komplexität erhöhenden zusätzlichen elektronischen oder mechanischen Bauteile erfordert. Allenfalls ist am Vermessungsgerät 2 eine Kommunikationsschnittstelle 2f erforderlich, mit welcher ein Datenaustausch mit der Kommunikationseinheit 23 des erfindungsgemäßen Moduls 1 herstellbar ist, sowie optional ein entsprechendes Software-Modul auf dem Vermessungsgerät zur Kommunikation, Datenverarbeitung und/oder Bedienung des erfindungsgemäßen Moduls 1 über diese Kommunikationsschnittstellen 23 und 2f. Alternativ kann eine Kommunikation des erfindungsgemäßen Moduls 1 wie schon gezeigt aber auch über ein externes Gerät, beispielsweise ein mobiles Bedienterminal oder einen Tablet-PC, erfolgen. Alternativ oder zusätzlich kann die Kommunikation dabei auch direkt oder indirekt mit einem, in Fig. 4 dargestellten, externen Cloud-System 32 erfolgen, insbesondere einem Cloud-Computing- und/oder Cloud-Storage-System. Vorzugsweise kommt dabei eine kabellose DatenKommunikation zum Einsatz.

Insbesondere im Fall einer kabellosen Datenkommunikation ist dabei das erfindungsgemäße Modul 1 mit einer eigenen Stromversorgung 22 ausgestattet, z.B. mit einer Batterie oder einem wiederaufladbaren Akku. Ein erfindungsgemäßes Modul kann dabei derart ausgebildet sein, dass sein Energieverbrauch minimiert wird, beispielsweise indem Sensoren und Funktionalitäten des Moduls 1 nur kurzzeitig, insbesondere während der Stationierung und/oder einer allenfalls folgenden Verifikation der Stationierung, aktiviert sind, während der eigentlichen Vermessung mit dem Vermessungsgerät 2 aber den wesentlichen Teil der Zeit ausgeschaltet oder im Standby sind.

Eine derartige, allenfalls folgende Verifikation der Stationierung kann dabei beispielsweise erfolgen, um Bewegungen des Stativs 3 über die Zeit zu überwachen. Beispielsweise können dabei ein oder mehrere Sensoren des erfindungsgemäßen Moduls 1 zyklisch oder sporadisch - z.B. durch das Modul 1, das Vermessungsgerät 2 und/oder einen Benutzer getriggert - aktiviert werden. Wenn beispielsweise das Stativ 3 einsinkt oder sich verschiebt, so ist dies an Veränderungen bei den Daten der Neigungssensoren 26, der Messkamera 25, einem optionalen distanzmessenden Laserpointer 28 und/oder einem Kompass 29 feststellbar. Eine derartige Veränderung kann dann beispielsweise eine Warnoder Alarmmeldung auslösen, und/oder eine vorzugsweise automatische erneute Bestimmung der Verortung durch das erfindungsgemäße Modul 1 auslösen. Beispielsweise kann das Modul 1, etwa im 5-Minutentakt, aktiviert werden, woraufhin es kurz die Koordinaten überprüft, also insbesondere z.B. die zwei Winkel Tilt-x und Tilt-y und allenfalls auch die NordAusrichtung mit einem Kompass 29 mit vorangegangenen Messwerten dieser Sensoren vergleicht, oder ein aktuelles Bild der Messkamera 25,25a mit einem vorangegangenen vergleicht, insbesondere wie dies im Folgenden nochmals beschrieben wird.

Die besagten zwei Winkel Tilt-x und Tilt-y können dabei von einem zumindest zweidimensionalen Neigungs- oder Beschleunigungssensor 26 im erfindungsgemäßen Modul 1 erfasst werden, welcher ausgebildet ist um einen Neigungswert des Moduls 1 gegenüber der Horizontalen und/oder Vertikalen in zumindest zwei Richtungen zu erfassen.

Im gezeigten Beispiel einer Ausführungsform eines Moduls 1 ist die Messkamera 25 derart angeordnet, dass deren Blickfeld 10 durch eine zentrale Bohrung in der Herzschraube 35 auf den Boden 9 gerichtet ist. In einem Bild dieser Messkamera 25 kann dabei eine, sich unter dem Stativ 3 befindende Bodenmarke 4 erfasst werden, und vorzugsweise kann eine Position der Bodenmarke 4 in diesem Bild in ihren Bildkoordinaten vermessen werden.

Um auch ein, vorzugsweise distanzmessendes, Laserlot oder Laserpointer 281 durch diese zentrale Bohrung in der Herzschraube 35 in Richtung Boden 9 aussenden zu können, ist in der gezeigten Variante einer Ausführungsform wie mit dem Pfeil 1v illustriert, die Kamera 25 bzw. deren Blickfeld 10 verschiebbar ausgebildet. Somit kann in dieser Variante entweder der Laserpointer 281 oder die Messkamera 25 freien Blick durch die Öffnung in der Schraube 35 haben. In einer alternativen Ausführungsform kann dabei auch umgekehrt die Messkamera 25 bzw. deren Blickfeld 10 fix und der Laserpointer 28 bzw. der Laserpointer-Lichtstrahl 281 verschiebbar sein. Insbesondere wenn der Laserpointer 28 bzw. eine Ablenkeinheit für den Laserpointer 28 vorgesehen ist, sodass dessen Lichtstahl 281 ohnehin derart beweglich ausgebildet ist, um mit dem Laserpointer-Laserstrahl 281 die Bodenmarke 4 auch Außerhalb der Lotrechten 7 anzuzielen, kann somit die Messkamera 25 fix bleiben und der ohnehin bewegliche Laserpointer 28 nur bei Bedarf in die Öffnung der Zentralschraube 35 gelenkt werden.

Der Laserpointer 28 kann dabei in einer Ausführungsform ohne Distanzmessfunktion, als einfacher Laserpointer zur Anzielung des Bodenpunkts 4 ausgebildet sein, oder in einer anderen Ausführungsform als distanzmessender Laserpointer 28, bei welchem eine elektrooptische Entfernungsmessung 28m zum angezielten Bodenpunkt 4 erfolgt. Mithilfe der dabei bestimmbaren Schrägdistanz des Strahls 281 (als Skalier-Information zum Bodenpunkt 4) zusammen mit den Neigungsinformationen kann die lotrechte Stationierungshöhe h über dem Bodenpunkt 4 ermittelt werden. Die Ablenkinformation der Laserlot-Lichtstrahlung 281 ist dabei bekannt, da der Laserstrahl mittels einer vorgängigen Bildauswertung der Lage der Bodenmarke 4 im Bild der Messkamera 25 ermittelt wurde. Optional kann eine Ablenkinformation einer Ablenkeinheit der Laserlot-Lichtstrahlung 281 miteinbezogen werden, z.B. über entsprechende Sensorik der Ablenkeinheit, wie Encoder, Neigungssensoren, etc. und/oder es kann ein Auftreffpunk der Laserlot-Lichtstrahlung 281 auf dem Boden 9 bzw. auf der Bodenmarke 4 von der Kamera 25, z.B. in Kamera-Koordinaten erfasst und ausgewertet werden.

Alternativ kann die Messkamera 25 auch als Range Imaging Kamera (RIM) ausgebildet sein, beispielsweise wobei deren photoempfindliche Elemente zumindest teilweise derart ausgebildet sind, um ein Entfernungsmessung nach einem Laufzeitoder Phasenmessprinzip von ausgesendeten Lichtpulsen eines Laserstrahls 281 durchzuführen.

**Fig. 4** zeigt ein Beispiel einer alternativen Ausführungsformen und Varianten eines Moduls 1 entsprechend der Erfindung, bei welchem das Modul 1 eine Verstell-Einrichtung 21 gleich oder ähnlich einem klassischen mechanischen Tribrach 8 zur Nivellierung eines aufgesetzten Vermessungsgeräts 2 als integralen Teil aufweist. Somit ist kein externer Tribrach 8 mehr erforderlich, und das Modul 1 kann somit eine klassischen Tribrach 8 ersetzen, da das erfindungsgemäße Modul 1 als Tribrach ausgebildet ist. Diese Ausführungsform des Moduls 1 weist dabei also einen Unterteil 1u zur Montage auf dem Stativ 3 und einen über Stelleinrichtungen 21 mechanisch nivellierbaren Oberteil 1o auf. Damit könne auch allfällige Fehler und Ungenauigkeiten bei der Montage eines separaten Tribrachs 8 vermieden werden. Insbesondere kann dabei die Stelleinrichtungen 21 so gestaltet sein, dass sich beim Nivellieren der Abstand zwischen dem Pivotpunkt 56 des erfindungsgemäßen Moduls 1 und dem Pivotpunkt 57 des Vermessungsgeräts 2 nicht verändert, oder eine allfällige Veränderung erfasst und berücksichtigt wird. Das Vermessungsgerät 2 kann dabei z.B. direkt auf den erfindungsgemäßen Modul 1 mittels Klemmvorrichtung 1k, insbesondere einer hochpräzisen und orientierungsfixierten Schnellspannvorrichtung, aufgesetzt werden.

Bei dieser erweiterten Ausführungsform umfasst das erfindungsgemäße Modul 1 wiederum alle notwendigen Komponenten, um Lotrichtung, Offset und Höhe über einem Bodenpunkt 4 zu bestimmen. Optional können wiederum auch andere bereits erwähnten oder hier noch erwähnte zusätzliche Funktionalitäten oder Varianten vorhanden sein, z.B. zumindest eines von: einer Neigungsmesseinrichtung 26, einer Kommunikationseinheit 23 zum Datenaustausch mit einer Gegenstelle 2f oder einem Cloud-system 32, einem distanzmessenden oder nicht distanzmessenden Laserpointers 28 oder 28m, welcher mit oder ohne Ablenkeinheit 28u für dessen Laserlicht ausgebildet sein kann, einer Energieversorgung 22, einem digitalen Magnetkompass 29, eine periphere Messkamera 25b, etc.

Wie bereits erwähnt, kann in einer anderen alternativen Variante oder auch zusätzlich zur zuvor erläuterten Messkamera 25 im Zentralbereich, kann das erfindungsgemäße Modul 1 auch mit einer optionalen peripheren Kamera 25b ausgebildet sein, welche den Boden 9 unter dem Stativ 3 zumindest teilweise erfasst, jedoch nicht wie Kamera 25 ihr Blickfeld zentral durch das Stativ 3, sondern seitlich am Stativ-Kopf oder der Stativplatte vorbei, von außen zwischen den Stativbeinen hindurch auf den Boden 9 gerichtet ist, sodass der Bodenpunkt 4 im Blickfeld 10b der peripheren Messkamera 25b liegt. Mit einer oder mehreren peripheren Kameras kann dabei gegebenenfalls ein größeres Blickfeld 10b abgedeckt werden, als mit einer zentralen Kamera 25.

Mit dem gezeigten distanzmessenden Laserlot oder Laserpointer 28 im Modul 1 kann hierbei die Schrägdistanz 28s zum Bodenpunt 4 bestimmt werden. Aus dieser Schrägdistanz gemeinsam mit einer Winkelinformation über die Ablenkung des Laserpointers gegenüber der Vertikalen kann eine Normalhöhe h der Stationierung über der Bodenmarke 4 ermittelt werden. Diese Winkelinformation kann z.B. aus einer Neigungsinformation von einem Neigungssensor 26 im Modul 1 und/oder einer Ablenkinformation einer Laserpointer-Ablenkeinheit 28u im Modul 1 und/oder mit einer Bildauswertung einer Lage der Bodenmarke 4 im Bild der Messkamera 25 ermittelt werden. Neben der Normalhöhe h zum Bodenpunkt 4 kann dabei auch eine laterale Horizontalabweichung der lotrechten oder normalen Stehachse oder Zentralachse 7 des Moduls 1 gegenüber der Bodenmarke 4 selbsttätig vom Modul 1 ermittelt werden. Damit kann das Modul 1 bzw. ein darauf aufgesetztes Vermessungsgerät 2 in drei lateralen Richtungen gegenüber der Bodenmarke 4 verortet werden. Gemeinsam mit einer z.B. durch die Neigungssensoren 26 und einer z.B. mit einem optionalen Kompass 29 oder durch Anmessung eines bekannten Punktes ermittelte Azimutal-Ausrichtung kann diese Verortung mit dem erfindungsgemäßen Modul 1 auch in fünf oder sechs Freiheitsgraden erfolgen.

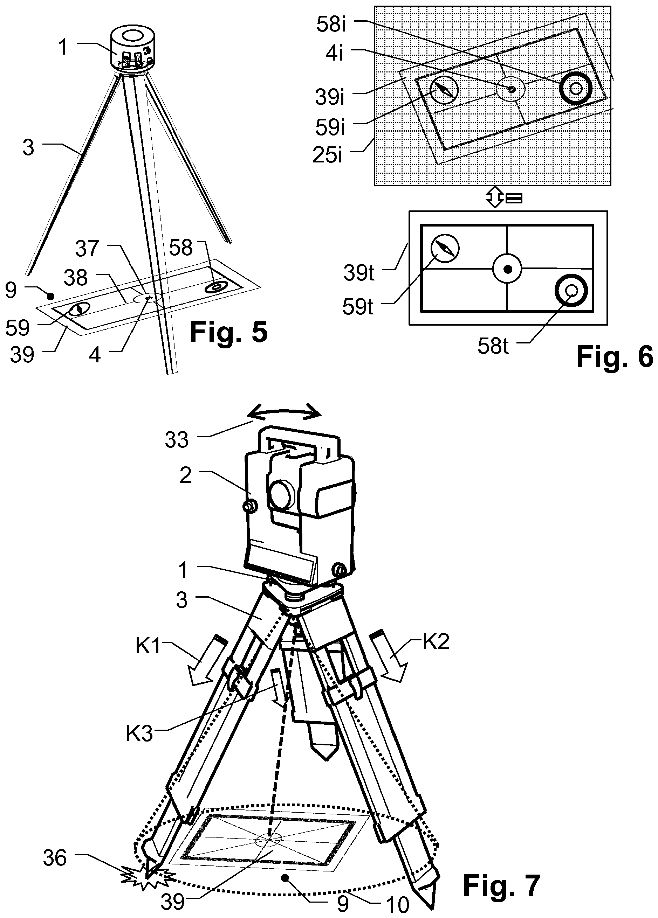

In dem in **Fig. 5** gezeigten Beispiel einer speziellen Ausführungsform einer Anwendung der vorliegenden Erfindung kann dabei - neben einer direkten Nutzung einer klassischen Bodenmarke 4 im klassischen Sinne - auch eine spezielle Zieltafel 39 zur Markierung des Bodenpunts 4 unter dem Stativ 3 genutzt werden. Der Anschaulichkeit halber ist das Vermessungsgerät 2 hier nicht gezeigt. Das Modul 1 kann dabei nach einer beliebigen der hier beschriebenen Ausführungsformen oder Varianten ausgebildet sein.

Eine Anwendung einer derartigen Zieltafel 39 für eine definierte Markierung des Bodenpunkts 4 kann beispielsweise genutzt werden, falls eine direkte Messung auf Bodenpunkt 4 nicht möglich ist oder Schwierigkeiten bei einer Distanzmessung mit dem Laserpointer 28 bereitet. Beispielsweise kann die Zieltafel 39 zur eindeutigen Markierung der Bodenmarke 4 genutzt werden, insbesondere im Falle von Verschmutzung der Bodenmarke 4, schlechter Sichtbarkeit der Bodenmarke 4 auf dem Untergrund 9, Verwechslungsgefahr der Bodenmarke 4, Nutzung einer anderen Bodenmarkierung wie z.B. einer Farbmarkierung eines Bolzens, Nagels, Lochs, etc. im Boden anstelle einer klassischen Bodenmarke 4, etc. Aber auch bei gewöhnliche Bodenmarken 4 kann ein genereller Einsatz einer solchen Zieltafel 39 eine Erhöhung des Komforts und/oder der Genauigkeit bei der Stationierung bieten. Eine Nutzung einer derartigen Stationierungs-Zieltafel 39 mit dem erfindungsgemäßen Modul 1 mit zumindest einer auf den Boden gerichteten Messkamera 25 und einem Neigungssensor 26, kann dabei nicht nur als spezieller Teilaspekt oder Gruppe von Ausführungsformen der Erfindung, sondern durchaus auch als eigenständige Erfindung angesehen werden.

Im gezeigten Beispiel kann die Zieltafel 39, beispielsweise als Kunststoff- oder Blechtafel ausgebildet sein, welche auf deren Fläche ein strukturiertes visuelles Kontrastmuster 38 aufweist. Die Struktur des Kontrastmusters 38 ist dabei derart ausgebildet, dass dieses beim Erfassen mit der Messkamera 25 im Modul 1 im Kamerabild 39i eindeutig und mit hoher Präzision erfassbar und in diesem Bild 39i skaliert und vermessbar ist. Dabei kann Beispielsweise das Muster 38 eine Skalierung des Kamerabilds 39i erzeugen und das Muster 38 als eine Art Triangulationsbasis herangezogen werden, wobei Messwerte der Neigungssensoren 26 bei der Messkamera 25 einbezogen werden. Die Zieltafel 39 liegt dabei im Wesentlichen horizontal oder in einer bekannten Neigung auf dem Boden 9.

Im gezeigten Beispiel ist eine weiße Zieltafel 39 mit einem (möglichst maßhaltig bzw. in bekannten Abmessungen) aufgedruckten schwarzen Punkt- und/oder Linienmuster 38 gezeigt, wobei Farben und Muster auch variieren können. Das Muster 38 der Zieltafel 39 kann dabei auch eine Codierung aufweisen oder ausbilden, z.B. ähnlich eines QR- oder Barcodes. Im gezeigten Beispiel weist die Zieltafel 39 in ihrer Mitte ein Loch 37 oder Fenster auf, welches zentrisch auf den zu markierenden Punkt 4 am Boden 9 bzw. der Bodenmarke 4 gelegt wird, um diesen eindeutig zu markieren. Dabei kann in dem Loch oder Fenster 37 ein Fadenkreuz oder ähnliches ausgebildet sein, um ein möglichst exakt zentrisches Auflegen zu erleichtern. Die Zieltafel 39 kann dabei optional auch mit Befestigungsmitteln ausgebildet sein, z.B. mit Klemmen, Klebeflächen, Befestigungslöcher für Schrauben oder Nägel, oder auch mit Sprühkleber oder durch Beschweren auf dem Boden 9 zumindest temporär fixiert werden. In einer modifizierten minimalen Ausführungsform umfasst die Zieltafel 39 optional auch eine Dosenlibelle 58 oder zwei orthogonale Röhrenlibellen, mittels welchen eine horizontale Ausrichtung der Zieltafel 39 senkrecht zur Lotrichtung von der Kamera 25 erfasst werden kann, womit z.B. die Zuverlässigkeit und/oder die Messgenauigkeit der Verortung verbessert oder verifiziert werden kann, speziell auch bei allenfalls nichthorizontalen Lagen der Zieltafel 39. Optional kann mit der Dosenlibelle 58 auch eine Horizontal-Ausrichtung der Zieltafel manuell hergestellt werden, welche allenfalls im Kamerabild der Dosenlibelle 58 zusätzlich verifiziert werden kann. In einer speziellen Ausführungsform kann die Zieltafel 39 auch ein oder mehrere Reflektoren aufweisen, insbesondere für das Licht des Laserpointers 28 und/oder dessen Distanzmessfunktionalität. Im gezeigten Beispiel befindet sich zentrisch im Loch 37 über dem Bodenpunkt 4 ein Reflektor-Punkt, welcher beispielsweise in etwa den Durchmesser des Lichtpunkts des Laserpointers 28 bzw. den Durchmesser einer zentrischen Vertiefung in der Bodenmarke 4 aufweist. Zusammen mit dem Modul 1 kann dabei erfindungsgemäß auch ein Set von unterschiedlichen Markiertafeln 39 für unterschiedliche Anwendungsfälle bereitgestellt werden. Die dabei erfolgenden Berechnungen können zumindest teilweise im Modul 1, im Vermessungsgerät 2, in der Bedieneinheit 31 und/oder im Cloud System 32 erfolgen. In einer weiteren Ausführungsform kann die Zieltafel 39 auch einen optionalen Kompass 59 aufweisen, welcher von der Messkamera 25 eingesehen und im Kamerabild ausgewertet werden kann. Damit können die Koordinaten des erfindungsgemäßen Moduls 1 zum äußeren Koordinatensystem, beispielsweise in einem geodätischen Koordinatensystem, festgelegt werden.

In **Fig. 6** oben ist ein Beispiel einer Aufnahme 25i der Messkamera 25 oder 25b im erfindungsgemäßen Modul 1 von Fig. 5 gezeigt. Da in diesem Beispiel eine Zieltafel 39 angewandt wird, ist im Bild 25i nicht nur - wie in erfindungsgemäßen Ausführungen ohne Zieltafel 39 - auf dem Boden nur die Bodenmarke 4 an sich, sondern auch die Zieltafel 39 abgebildet. Die Zieltafel 39 hat dabei bekannte geometrische Proportionen und Abmessungen, sowie vorzugsweise ein bekanntes Kontrastmuster, beispielsweise bekannt in Form von hinterlegten Zieltafeldaten 39t oder einem hinterlegten Zieltafel-Referenzbild 39t, wie dieses etwa in der unteren Hälfte der Figur gezeigt ist.

Die Zieltafel 39i bzw. der Bodenpunkt 4i kann dabei im Bild 25i vorzugsweise automatisch erkannt werden, allenfalls kann ein derartiges Erkennen im Bild 25i auch semiautomatisch, interaktiv oder manuell durch den Benutzer erfolgen. Dabei kann im Bild 25i ein Vermessen der abgebildeten Zieltafel 39i und deren visuellen Merkmalen 38 (oder der Bodenmarke 4i an sich) in Bildkoordinaten erfolgen, was hier durch ein Rastermuster symbolisiert ist. Anhand der bekannten Abbildungseigenschaften der Messkamera 25 kann aus der Vermessung der Zieltafel 39 und/oder Bodenmarke 4i im Bild 25i der Messkamera 25, eine relative Lage der Zieltafel 39 und/oder Bodenmarke 4 zur Messkamera 25 bestimmt werden. Je nach Ausbildung kann dabei zumindest eine Winkelrichtung zur Bodenmarke 4 bzw. der Zieltafel 39 in Bezug auf ein Messkamera 25- oder Modul 1-Koordinatensystem aus den Bildkoordinaten und den Abbildungseigenschaften der Messkamera 25 ermittelt werden. In einer erweiterten Ausbildung lassen sich - insbesondere anhand des Musters 38 auf der Zieltafel 39 - auch weitere Informationen und Freiheitsgrade wie Abstand ermitteln, und somit eine Lage der Messkamera 25, und somit des erfindungsgemäßen Moduls 1, relativ zur Zieltafel 39, und somit auch zur Bodenmarke 4, ermitteln und somit die Verortung oder die dafür benötigen Rohdaten bestimmen.

Dabei können etwa Abbildungsgröße, perspektivische Verzerrungen, Bildkoordinaten, etc. ausgewertet werden, beispielsweise über einen analytischen und/oder maschinengelernten Algorithmus. In speziellen Ausführungsformen kann dabei ein erfindungsgemäßes Modul 1 derart ausgebildet sein, dass dieses mithilfe der Zieltafel 39 am Bodenpunkt 4 eine relative Position und/oder Lage des Moduls 1, insbesondere des Pivotpunkts mit seinen drei lokalen Koordinatenachsen, gegenüber dem Bodenpunkt 4 anhand des Bilds 25i der Messkamera 25 in drei oder mehr Freiheitsgraden ermitteln kann, vorzugsweise in einer Genauigkeit im Bereich von einem Millimeter oder genauer. Zusammen mit den zumindest zweiachsigen Neigungssensoren 26 im Modul 1 kann damit eine Verortung in zumindest fünf Freiheitgraden ermittelt werden, gemeinsam mit Daten einer optionalen Kompass-Einheit 29 oder einer anderen Azimutalreferenz kann damit eine absolute Referenzierung gegenüber einem globalen Koordinatensystem 20a, in welchem die Bodenmarke 4 registriert ist, hergestellt werden. Die bei der Verortung durchzuführenden Berechnungen und Bildverarbeitungsroutinen können dabei zumindest teilweise mit einer Recheneinheit 27 im Modul 1, in einer externen Bedieneinheit 31, im Vermessungsgerät 2 und/oder in einem externen FOG- oder Cloud-System 32 erfolgen.

Das erfindungsgemäße Modul 1 kann optional auch mit einer Beleuchtung oder einem Blitzlicht ausgestattet sein, um auch bei schlechten Umgebungslichtverhältnissen eine qualitativ hochwertiges Bild 25i zu erhalten.

In einer Ausführungsform eines Moduls 1 entsprechend der vorliegenden Erfindung kann dabei beispielsweis zur Verortung gegenüber einer Bodenmarke 4 lediglich eine Messkamera 25 und einen zumindest zweiachsigen Neigungssensor 26 aufweisen, insbesondere wenn dieses Modul 1 mit einer Zieltafel 39 verwendet wird, oder wenn die Bodenmarke 4 an sich eine bekannte visuelle Struktur 38 aufweist, welche hinreichende visuelle Merkmale aufweist, um anhand eines Bilds 25i von dieser die Verortung in den gewünschten Koordinaten mit hinreichender Genauigkeit durchführen zu können. Neben Messkamera 25 und Neigungssensor 26 kann das Modul 1 dabei auch nicht direkt verortungsrelevante Elemente aufweisen, insbesondere ein Gehäuse, eine Energieversorgung 22, ein Kommunikationsmodul 23, einen Mikroprozessor 27 und allenfalls einen Temperatursensor, eine kabelgebundene oder kabellose Ladeeinheit, sowie optional weitere Komponenten.

Bezüglich der Verortung an sich kann eine andere Ausführungsform auch ein Laserpointer 28 oder ein distanzmessender Laserpointer 28m genutzt werden welches auf den Bodenpunkt 4 bzw. zumindest einen definierten Punkt der Zieltafel 39 ausgerichtet wird. Dabei kann der Auftreffpunkt des Laserpointers 281 mit der Messkamera 25 im Bild 25i in seiner Lage bzw. Raumrichtung erfasst und vermessen werden und in die Berechnung der Verortung miteinfließen. Um die Meßgenauigkeit weiter zu steigern kann optional die Messkamera 25 den Laserpointer 28 zu mehreren Punkten auf der Zieltafel 39 lenken, jeweils die Distanzen messen und gleichzeitig Bilder aufnehmen, womit die räumliche Lage der Zieltafel redundant bestimmt wird, und die wichtigen Parameter der Verortung damit sehr genau festgelegt werden können.

Neben einer einmaligen Stationierung des Vermessungsgeräts 2 ist in **Fig. 7** ein erfindungsgemäßes Überwachen oder Monitoring der Stationierung während des Messbetriebs mit einem erfindungsgemäßen Modul 1 erläutert. Dabei wird nach der initialen Stationierung, also während des Messbetriebs bei gleichbleibender Stationierung, diese auf allfällige Abweichungen überwacht, beispielsweise auf Stativverdrehungen, Stativeinsinken 36, Verstellung des Stativs K1,K2,K3 oder ähnliches - was zu einer Abweichung 33 der Stationierung führen kann.

Ein Monitoring eines instabilen Stativs 3, der Orientierung und/oder der Stationierungshöhe kann dabei überprüft werden, indem eine oder mehrere Messkameras 25 im erfindungsgemäßen Modul 1 die Aufstellung des Vermessungsgeräts 2 nach abgeschlossener Initial-Stationierung nochmals überwacht, beispielsweise zyklisch in Abständen von mehreren Minuten, oder durch andere Ereignisse ausgelöst, etwa durch den Benutzer, durch Störungen dritter Personen oder vor einem Start einer neuen Vermessungsserie. Alternativ oder zusätzlich zu einem Monitoring auf Stabilität der Messwerte des Neigungssensors 26 und/oder Kompass 29 im Modul 1 kann das Monitoring auch mit einem überwachen von Bildern 25i der Messkamera 25 auf Änderungen erfolgen. Da aber speziell Beleuchtungsänderungen, Schattenwurf, etc. einen merklichen Einfluss auf ein Bild 25i der Messkamera 25 haben können, werden dabei erfindungsgemäß nicht lediglich die rohen Bilddaten 25i verglichen, sondern eine abstrahierte Auswertung der Bilder 25i, wie z.B. die Lage des Bodenpunkts 4i bzw. dessen Zentrums oder Bild-Schwerpunkts in Bildkoordinaten, eine Lage von Merkmalen einer Zieltafel 39i im Bild 25i, oder ähnlichem, welche vorzugsweise weitestgehend beleuchtungsunabhängig erfassbar sind. Wird dabei eine Veränderung und/oder Verschiebung der Zieltafel 39i oder Bodenmarke 4i im Blickfeld 10 der Messkamera 25 festgestellt, welche über einem Schwellwert liegt, so wird ein Alarm ausgelöst und/oder eine neue, aktualisierte Stationierung bestimmt, welche als Grundlage für künftige Messungen mit dem Vermessungsgerät 2 dient und diesem entsprechend bereitgestellt wird.

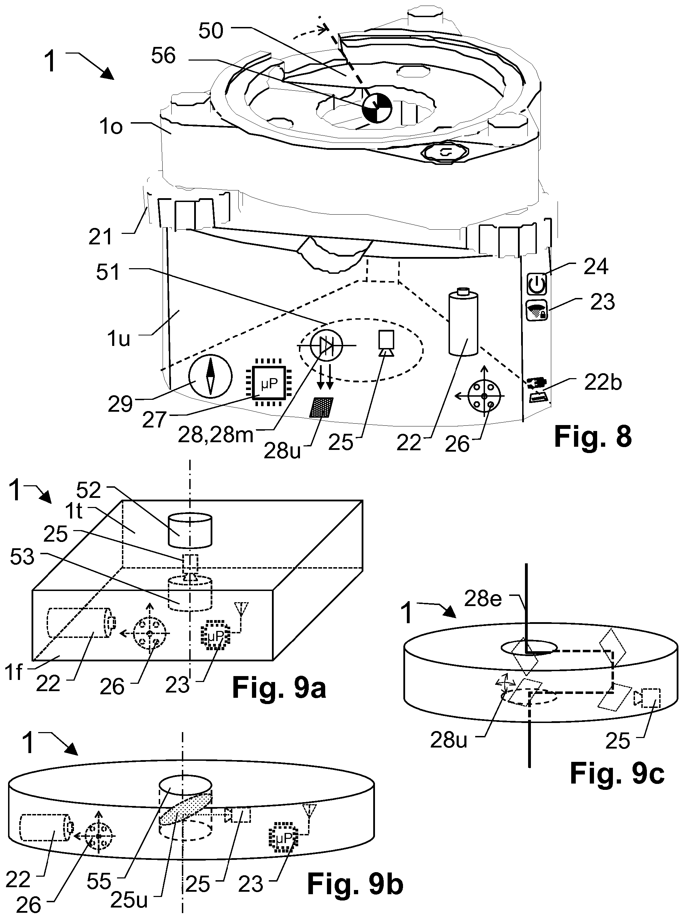

In Fig. 8 ist dabei nochmals eine schematische Detailansicht einer beispielhaften Ausführungsform eines Moduls 1 entsprechend der vorliegenden Erfindung gezeigt, bei welcher zumindest Teile des obligatorischen und/oder optionalen Innenlebens des Moduls 1 dargestellt sind.

In dieser Ausführungsform fungiert das erfindungsgemäße Modul 1 als Ersatz für einen klassischen Tribrach 8, indem es dessen Funktion und Grundstruktur mit einem Einstellmechanismus beispielsweise drei Stellschrauben 21 zur Nivellierung eines auf dem Oberteil 1o des Moduls 1, vorzugsweise mit einer Schnellspanneinrichtung 50, anbringbaren Vermessungsgeräts 2 aufweist. Der Einstellmechanismus ist vorzugsweise derart ausgelegt, dass sich beim Nivellieren die Höhe des Pivotpunkts 56 nicht ändert. Beim Pivotpunkt 56 ist in dieser Figur auch ein optionaler rechtsseitiger Anschlag zur Definition einer azimutalen Ausrichtung zwischen Vermessungsgerät 2 und Modul 1 illustriert. Auf der Unterseite des Unterteils 1u des Moduls 1, also hin zum Stativ 3, ist in allen erfindungsgemäßen Ausführungsformen im Gehäuse des Moduls 1 zumindest eine Messkamera 25 und Neigungssensoren 26 untergebracht, sowie eine Kommunikationseinheit 23, eine Energieversorgung 22 und eine Steuereinheit 27. Das Unterteil 1u des Moduls 1 kann dabei über eine Zentralschraube an einem Standard-Vermessungsstativ 3 befestigt werden.

Als Beispiele weiterer, je nach Ausführungsform allenfalls vorhandenen Komponenten eines erfindungsgemäßen Moduls 1 ist in dieser Figur gezeigt:
▪ ein Einschalter 24 (optional mit Status-Indikator wie einer Led oder einem Display),
▪ ein Ladeanschluss 22b oder ein kabelloses Lademodul zur Aufladung der Energieversorgung (optional mit einem Batterie-Indikator zur Anzeige des Ladezustands),
▪ einen Kommunikations-Indikator 23 zur Bereitstellung von Informationen bezüglich einer Kommunikationsverbindung (optional mit einem Bedienelement zur Herstellung einer Kommunikationsverbindung)
▪ eine magnetische oder gyroskopische Kompasseinheit 29,
▪ ein Laserpointer 28 oder distanzmessender Laserpointer 28m,
▪ eine Ablenkeinheit 28u für den Laserpointer 28 oder 28m zur Veränderung einer Emissionsrichtung des Laserlots,
▪ optional eine Winkelmesseinheit (Encoder) zur Messung der Richtung der Ablenkeinheit 28u,
wobei diese beispielhafte Aufzählung nicht abschließend sein muss.

In einer Ausführungsform kann das Modul 1 dabei mit einer durchgehenden Ausnehmung 51 ausgebildet sein, durch welche ein Laserlot oder Laserpointer 28 (mit oder ohne Distanzmessfunktion), ein optisches Lot oder eine Visiereinrichtung eines aufgesetzten Vermessungsgeräts 2 durch das montierte Modul 1 hindurch zum Boden gerichtet werden kann. Alternativ kann auch anstelle einer physikalischen Ausnehmung, mit optischen Komponenten ein optischer Pfad durch das Modul 1 bereitgestellt werden, sodass das Modul 1 einer Nutzung eines Laserlots (o.a.) des Vermessungsgeräts 2 nicht im Wege steht - z.B. wie in Fig. 9b beispielhaft gezeigt.

In einer erweiterten Ausführungsform kann das erfindungsgemäße Modul 1 auch mit einem integrierten Laserlot oder Laserpointer 28 ausgebildet sein, womit das Modul 1 diese Funktionalität auch für Vermessungsgeräte 2 ohne integriertem Laserlot bereitstellt oder nachgerüstet. Damit kann auch die Ansteuerung und Auswertung des Laserlots oder Laserpointers 28 direkt durch das Modul 1 erfolgen. Das Modul 1 kann hierbei z.B. eine Laserlichtquelle und zumindest eine Optik, insbesondere eine Kollimationsoptik für die Laserstrahlung der Laserlichtquelle und allfällige Umlenkelemente aufweisen. In einer erweiterten Ausführungsform des Laserpointers 28 kann dieser auch als distanzmessender Laserpointer 28m ausgebildet sein, insbesondere mit einer Empfangseinrichtung für einen von einem Zielpunkt des Laserpointers 28m zurückgeworfenen Anteil der Laserstrahlung, sowie einer Distanzmesseinheit zur Ermittlung eines Distanzmesswerts zum Zielpunkt, z.B. nach einem Laufzeit- und/oder Phasenmessprinzip von ausgesendeten Laserlicht-Pulsen des distanzmessenden Laserpointers 28m.

In einer erweiterten Ausführungsform mit integriertem oder mit externem Laserpointer oder Laserlot 28,28m, kann das erfindungsgemäße Modul 1 dabei auch mit einer Ablenkeinheit 28u für ein Laserlot des Vermessungsgeräts 2 ausgebildet sein, mittels welcher die optische Strahlung dieses Laserlots auch auf einen dezentral liegenden Bodenpunkt 4 ausrichtbar ist. Die Ablenkeinheit 28u kann dabei motorisiert oder manuell beweglich sein, beispielsweise mit beweglichen Spiegeln, Linsen, oder Glaskeilen. Ein Ablenkwert kann dabei durch einen entsprechenden Encoder in der Ablenkeinheit 28u, durch einen zusätzlichen Beschleunigungs- oder Neigungssensor an einem ablenkenden Element der Ablenkeinheit 28u und/oder durch ermitteln der Lage des Auftreffpunkts der Laserlotstrahlung auf der Bodenmarke 4 im Bild der Messkamera 25 ermittelt werden. Speziell mit einer Ablenkeinheit 28u zur Anzielung der Bodenmarke 4 mit dem Lichtstrahl 281 des distanzmessenden Laserpointers oder Laserlots 28m, kann damit eine Schrägdistanz vom Modul 1 zu der Bodenmarke 4 ermittelt werden, aus welcher z.B. mit Messwerten eines Neigungssensors 26 eine Normalhöhe der Stationierung ableitbar ist. Die Ausrichtung des Laserstrahls 281 auf die Bodenmarke 4 kann dabei gesteuert auf Basis der Messkamera 25 automatisch erfolgen, z.B. indem die Messkamera 25 in einem ersten Schritt die Richtung zur Bodenmarke 4 bestimmt und anschließend die Ablenkeinheit 28u für den Laserpointer oder das Laserlot 28 oder 28m steuert, um dessen Auftreffpunkt im Kamerabild an eine gewünschte Stelle zu bewegen, z.B. auf eine visuelle Markierung auf einer Zieltafel 39 auszurichten.

Ein optischer Pfad der Messkamera 25 und ein optischer Pfad des Laserlots 28 können dabei (z.B. durch Einspiegeln, spektrale Trennung, etc.) zumindest teilweise überlappend ausgebildet sein, speziell um beide optischen Pfade durch eine Bohrung in einer Zentralschraube 35 des Stativs 3 zu lenken. In speziellen Ausführungsformen kann das erfindungsgemäße Modul 1 auch eine speziell für das Modul 1 ausgebildete Zentralschraube 35 umfassen, welche in ihrem Zentrum, also in ihrer zentralen Bohrung, optische Elemente aufweist - wie z.B. eine oder mehrere Linsen, eine Fischaugen-Optik, oder anderes - um bei einem Durchblick der Messkamera 25 und/oder des Laserlots oder Laserpointers 28 durch die Zentralschraube 35 deren Gesichtsfeld 10 in Richtung Boden 9 unter dem Stativ 3 zu erweitern.

**Fig. 9a** zeigt ein Beispiel einer andern Ausführungsform, bei welcher das Modul 1 ohne integrierte Tribrach-Funktion ausgebildet ist. Bezüglich der internen Komponenten, Optionen und Ausführungsformen des Moduls 1 sei auf die obenstehenden Beschreibungen verwiesen - wobei die Tribrach-Baugruppe mit der Nivelliermöglichkeit 21 nicht fester Bestandteil des Moduls 1 ist, sondern das Modul 1 eine obere Montagefläche 1t aufweist, auf welcher optionale ein externes Tribrach-Modul 8 anbringbar ist. Beispielsweise kann das Modul 1 dabei an seiner Oberseite 1t einen Gewindezapfen 52 und vorzugsweise auf gleicher Achse auf der Unterseite 1f ein Innengewinde 53 aufweisen- vorzugsweise beides entsprechend einer Norm für Stativschrauben.

Hier speziell gezeigt ist eine Minimalausführung eines erfindungsgemäßen Moduls 1 mit den wesentlichen Komponenten einer zentralen Messkamera 25 und einem zweiachsigen Neigungssensor 26, einer internen Energieversorgung 22 und einer Kommunikationseinheit 23 - welche in einem Gehäuse mit einer oberen Montageplatte 1t und einer unteren Montageplatte 1f untergebracht sind. Der jeweils zu verortende Referenzpunkt oder Pivotpunkt des erfindungsgemäßen Moduls 1 befindet sich vorzugsweise in der Mitte der oberen Auflagefläche, z.B. gebildet durch eine Ebene der Gehäuseoberseite.

In einer Variante einer Ausführungsform eines erfindungsgemäßen Moduls 1 in **Fig. 9b** - welches insbesondere speziell zur Verwendung mit Vermessungsgeräten 2, welche bereits ein internes Laserlot oder einen Laserpointer aufweisen, ausgebildet ist - kann ein derartiges Laserlot des Vermessungsgeräts 2 durch eine Öffnung 55 oder Bohrung 55 durch das erfindungsgemäße Modul 1 hindurchgelassen werden. Dabei kann optional z.B. auch ein Blickfeld einer zentralen Messkamera 25 in diese Öffnung 55 eingespiegelt oder eingeschwenkt werden, z.B. über einen hier gezeigtes Umlenkelement 25u wie einem dichroitischen Spiegel, einen sphärischen Spiegel, einer Bohrung oder einem Durchtrittsfenster im Spiegel. Alternativ kann aber auch das Umlenkelement 25u und/oder die Messkamera 25 im Modul 1 manuell oder motorisch verschoben oder verschwenkt werden, z.B. derart, dass deren Blickfeld zentral durch die Herzschraube gerichtet ist oder diesen zentralen Pfad für einen Laserpointer freigibt. Die weiteren gezeigten Komponenten wurden bereits anderswo beschrieben.

In einer weiteren Variante einer Ausführungsform eines erfindungsgemäßen Moduls 1 in **Fig. 9c** - welches insbesondere speziell zur Verwendung mit Vermessungsgeräten 2, welche bereits ein internes Laserlot 28e aufweisen, ausgebildet ist - kann ein Laserlot 28e des Vermessungsgeräts 2 auch oben in das Modul 1 eingekoppelt, durch das Modul 1 gleitet, und unten wieder ausgekoppelt werden. Dabei kann allenfalls auch der Pfad des Laserlot-Lichtstrahls 28e des Vermessungsgeräts 2 innerhalb des Moduls 1, z.B. über Spiegel und/oder Prismen umgelenkt werden, sodass der Laserlot-Lichtstrahl 28e oben ins Modul 1 eingekoppelt und unten wieder (vorzugsweise aber nicht zwingend durch das Stativ 3 bzw. dessen Herzschraube 3) ausgekoppelt wird. Allfällige Pfadlängenänderungen durch eine derartige Strahlführung können dabei, insbesondere bei einem distanzmessenden Laserlot 28e, durch einen entsprechenden Offset oder andere Parameter korrigiert werden.

Bei einem derartigen Durchtritt des Laserlot-Lichtstrahls 28e des Vermessungsgeräts 2 durch das erfindungsgemäße Modul 1 kann dabei auch - z.B. mit einem dichroitischen Spiegel, einer koaxialen ein-/aus-Koppeleinheit, einen Spiegel mit einem Loch für das Laserlot oder dergleichen - die Messkamera 25 des Moduls 1 in den Strahlengang des Laserlots 28e des Vermessungsgeräts 2 eingekoppelt werden. In einer Variante kann dabei auch der durch das Modul 1 durchtretende Laserlot-Lichtstrahl 28e im Modul 1 von einer Ablenkeinheit 28u ablenkbar sein, beispielsweise um Laserlot 28e oder distanzmessende Laserlot 28e des Vermessungsgeräts 2 auf die Bodenmarke 4 auszurichten, auch wenn diese nicht zentrisch unter der ursprünglichen Laserlot-Achse liegt. Dabei kann wie bereits beschreiben ein Ablenkungswert der aktuellen Ablenkung durch die Ablenkeinheit 28u erfasst werden, welcher in die Berechnung der Stationierung mit einbezogen wird. Falls die Ablenkeinheit 28u des Laserlot-Lichtstrahls 28e im Modul 1 vor der Einspiegelung der Messkamera 25 angebracht ist, bleibt die Richtungskalibration des Blickfeldes 10 der Messkamera 25 erhalten und es kann wie beschrieben eine Laserstrahlausrichtung des abgelenkten Laserpointers oder Laserlots 28 mittels der Messkamera 25 ermittelt werden, sodass allenfalls auf eine Encoder-Einheit bei der Ablenkeinheit verzichtet werden kann.

Die weiteren Komponenten des Moduls 1 wurden der Übersichtlichkeit halber nicht gezeigt, sind aber anderswo beschrieben.

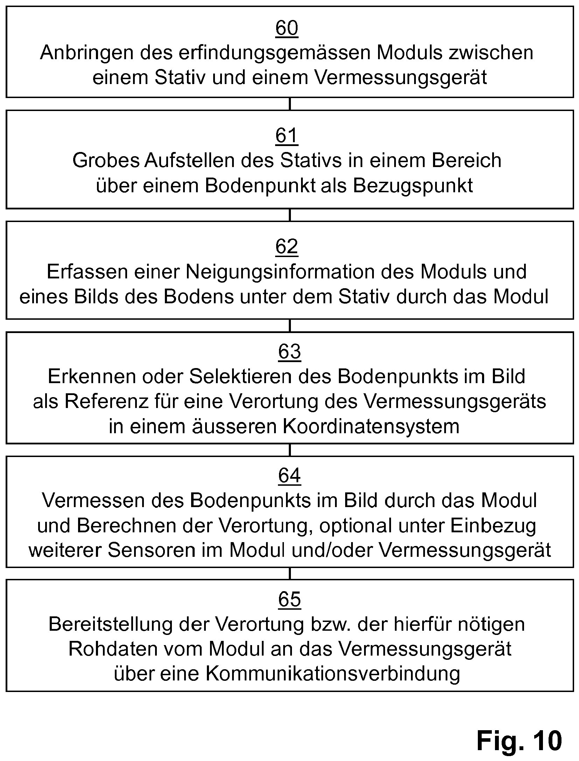

**Fig. 10** zeigt ein Blockdiagramm einer Ausführungsform eines Verfahrens oder einer Methode zur Stationierung entsprechend der vorliegenden Erfindung. Diese kann umfassen:
Bereitstellen eines eigenständigen Moduls 1 entsprechend der Erfindung, insbesondere eines eigenständigen intelligenten Smart-Tribrach-Moduls 1, speziell mit einer eigenen Stromversorgung 22 und einer vorzugsweise kabellosen Kommunikationsschnittstelle 23 zum Vermessungsgerät, speziell zu einem Theodolit oder einer Totalstation. Das Vermessungsgerät kann dabei z.B. mit einem entsprechenden Software-Modul ausgestattet sein, welches den Smart-Tribrach-Moduls 1 in seiner Umgebung automatisch erkennt und/oder entsprechende Menus und/oder Funktionen zur Einbindung und Bedienung des Smart-Tribrach-Moduls 1 am Vermessungsgerät 2 oder einem externen Bediener- Tablet 32 bereitstellt. Das eigenständige Modul 1 wird dabei zwischen Stativ 3 und Vermessungsgerät 2 montiert. Aufstellen des Stativs 3, sodass dieses zumindest grob über dem Bodenpunkt 4 aufgestellt ist, vorzugsweise nach Augenmaß in etwa zentral über dem Bodenpunkt 4, zumindest aber derart, dass der Bodenpunkt 4 zwischen den Beinen des Stativs 3 zu liegen kommt.

Bei diesem Aufstellen muss das Stativ 3 bzw. Vermessungsgerät 2 also insbesondere nicht mehr exakt über dem Bodenpunkt 4 zentriert werden. Abgesehen von einer groben, nach Augenmaß oder mit einer Dosenlibelle durchführbaren Horizontierung des Stativs sind also insbesondere keine Justagevorgänge am Stativ 3 erforderlich, speziell also keine iterativen und feinen Stativbeinlängenverstellungen. Dabei können die Tilt-Sensoren 26 im Modul 1 über die Kommunikationsschnittstelle 23 Feedback über eine hinreichende Grob-Horizontierung geben und/oder es kann ein Bild der Messkamera 25 übertragen werden, in welchem verifiziert werden kann ob sich der Bodenpunkt 4 in deren Blickfeld befindet.

Ein exaktes Horizontieren der Vermessungsgeräts 2 kann dann in bekannter Weise durch Drehen der Stellschrauben 21 am integrierten oder externen Tribrach 8 durchgeführt werden. Die nächsten Schritte erfolgen dabei mit dem erfindungsgemäßen Modul 1 vorzugsweise automatisch und werden entweder durch das Vermessungsgerät 2 oder durch eine Bedienung am Tablet-PC 31b koordiniert. Die fixe oder einschwenkbare Messkamera 25, welche als zentrale Messkamera 25 und/oder periphere Messkamera 25b ausgebildet sein kann, nimmt Bilder vom Boden auf, welche den, für die Referenzierung zu nutzenden Bodenpunk 4 im Blickfeld 10 aufweisen. In einer Ausführungsform kann dabei eine automatische Bilderkennung des Bodenpunkts 4 im Bild 25i durchgeführt werden, welche den Bodenpunkt 4i im Bild 25i identifiziert und/oder klassifiziert, wobei insbesondre auch Maschine-Learning Ansätze zur Anwendung kommen können. Beispielsweise kann dabei auch eine Grob-Position des aktuellen Standorts, z.B. via GPS, ermittelt werden und eine lokale- oder Cloud-Datenbank von Bodenmarkierungen 4 an bzw. um diesen Standort abgefragt werden, und somit ein äußeres Koordinatensystem 20a der Bodenmarke 4 zugeordnet werden. Speziell kann auf einem auf der Bedieneinheit gezeigten Bild 25i der Messkamera 25 ein oder mehrere mögliche Bodenpunkte 4 durch Markierungen vorgeschlagen werden, welche der Benutzer dann bestätigt, auswählt oder eine manuelle Markierung eines gewünschten Bodenpunkts 4 im Bild 25i setzt.

Das erfindungsgemäße Modul 1 führt dann, vorzugsweise vollautomatisch, die Verortung des Vermessungsgeräts in Bezug auf den Bodenpunkt 4 wie hier beschrieben durch. Bei einfacheren Ausführungsformen des Moduls 1 kann allenfalls auch eine Semi-Automatische Verortung, z.B. mit einer vom Modul 1 geführten Interaktion durch den Benutzer wie z.B. manuelles Ein-/Ausschwenken der Messkamera 25, manuelles Ausrichten eines vorzugsweise distanzmessenden Laserlots oder Laserpointers 28 auf den Bodenpunkt 4, etc. Die Verortung umfasst dabei zumindest die (Normal-)Höhe h und die x,y-Ablagen, welche vom Modul 1 bzw. aus den von diesem gelieferten Rohdaten, wie Sensorwerten und Messkamerabildern 25i, berechnet werden. Für die Verortung des Vermessungsgeräts 2 in Bezug auf den Bodenpunkt 4 werden zudem automatisch Kalibrationsdaten wie z.B. die Offsets zwischen den beiden Pivotpunkten von Vermessungsgerät 2 und Modul 1 oder andere Informationen über die beteiligten Geräte und deren Setup berücksichtigt. Diese Kalibrationsdaten können beispielsweise am Anfang der Aufstellung im Rahmen einer Initialisierung ausgetauscht und synchronisiert werden.

Alternativ, oder speziell falls der Bodenpunkt 4 nicht identifiziert oder erkannt werden kann, können zusätzlich noch die folgenden Schritte ausgeführt werden:
Ein Zieltafel 39 oder Code-Tafel auf den Bodenpunkt 4 legen, vorzugsweise zentrisch.

Aufnehmen eines Bilds 25 mit der Zieltafel 39 im Blickfeld 10 der Messkamera 25.

Berechnen der Stationierungshöhe h und der x,y-Ablagen der mit der Zieltafel 39 markierten Bodenmarke 4 in Bezug zum Lotfusspunkt des erfindungsgemäßen Moduls 1 und somit auch zum Vermessungsgerät 2.

Vorzugsweise sollte dabei eine Orientierung des erfindungsgemäßen Moduls 1 zum Vermessungsgerät 2 dabei in etwa auf ca. 10arc-min genau bekannt sein, was in etwa einen in den meisten Anwendungen tolerierbaren Fehler von ca. 1mm bei einer x,y-Ablage des Bodenpunkts von 35cm ergibt. Dazu kann das Modul 1 optional mit einer Kompasseinheit ausgebildet sein, und/oder Norden bzw. die Kalibration der Azimutalen Richtung Hz0 kann vom Vermessungsgerät hinreichend genau bestimmt werden und diese Orientierung kann dann vom Vermessungsgerät 2 dem erfindungsgemäßen Modul 1 bereitgestellt werden, bzw. kann die finale Berechnung der vollständigen 6-DoF Verortung auch extern vom Modul 1, also etwa im Vermessungsgerät 2 oder Bedienpanel 31 erfolgen. Eine Orientierung kann auch über einen in der Zieltafel 39 integrierten Kompass 59 erfolgen, welcher über eine Bilderfassung und Bildauswertung die Azimutale Richtung des Moduls 1 anhand einer Ausrichtung der Kompassnadel im Bild der Messkamera 25 festlegt. Zusammenfassend oder in anderen Worten sind in der beispielhaften Ausführungsform der Figur speziell gezeichnet:
In Block 60 erfolgt ein Anbringen des erfindungsgemäßen Moduls 1 zwischen einem Stativ 3 und einem Vermessungsgerät 2.
In Block 61 erfolgt ein grobes Aufstellen des Stativs 3 in einem Bereich über einem Bodenpunkt 4 als Bezugspunkt und eines Verbindungsaufbaus einer Kommunikation zwischen Modul 1 und einem externen Steuergerät oder einem Vermessungsgerät 2r, optional mit einem Synchronisieren von Kalibrationsdaten der Kommunikationsteilnehmer.
In Block 62 erfolgt ein Erfassen einer Neigungsinformation des Moduls 1 und eines Bilds 25i des Bodens 9 unter dem Stativ 3 durch eine Messkamera 25 im Modul.
In Block 63 erfolgt dann ein Erkennen oder Selektieren des Bodenpunkts 4i im Bild 25i als Referenz für eine Verortung des Vermessungsgeräts 2.
In Block 64 erfolgt ein Vermessen des Bodenpunkts 4 im Bild 25i durch das Modul 1 und ein Berechnen der Verortung. Dieses kann optional unter Einbezug zusätzlicher Hilfsmittel wie Zieltafel 39 oder weiterer Messwerte von Sensoren im Modul 1 und/oder Vermessungsgerät 2 erfolgen, insbesondre unter Einbezug eines entfernungsmessenden Laserpointers 28m, welcher auf die Bodenmarke 4 ausgerichtet ist.
In Block 64 erfolgt ein Bereitstellen der Verortung bzw. der hierfür nötigen Rohdaten vom Modul 1 an das Vermessungsgerät 2 über eine vorzugsweise kabellose Kommunikationsverbindung 23.

## Patentansprüche

1. Eigenständiges Modul (1) zur Montage zwischen einem Stativ (3) und einem Vermessungsgerät (2) und zur Verortung des mit dem Stativ (3) über einer Bodenmarke (4) stationierten Vermessungsgeräts (2) in Bezug zu der Bodenmarke (4), mit
▪ einem Gehäuse, welches ausgebildet ist um zwischen dem Stativ (3) und dem Vermessungsgerät (2) angebracht zu werden, mit einer unteren Montageplatte (1f) zur Verbindung mit dem Stativ (3) und mit einer oberen Montageplatte (1t) zur Verbindung mit dem Vermessungsgerät (2),
▪ einer Messkamera-Einheit (25), welche derart angeordnet und ausgebildet ist, dass bei dem auf einem Stativ (3) montierten Modul (1) die Bodenmarke (4) im Blickfeld der Messkamera-Einheit (25) erfassbar ist,
▪ einer Energieversorgung (22), insbesondere eine vorzugsweise wiederaufladbare Batterie,
▪ einem Neigungssensor (26), zur Ermittlung einer Neigung des Moduls (1) gegenüber einer Horizontalrichtung,
▪ einer Kommunikationseinheit (23), zur vorzugsweise drahtlosen Kommunikation mit dem Vermessungsgerät (2) und/oder einer externen Bedieneinheit (31),
▪ einer Verortungseinheit (27), welche derart ausgebildet ist, dass diese mit
o einer Bildinformation der Bodenmarke (4) von der Messkamera-Einheit (25), insbesondere mit einer Vermessung der Bodenmarke (4) oder eines visuellen Musters (38) einer definierten Zieltafel (39) in der Bildinformation mit einer elektronischen Bildverarbeitung, und
o einer Neigungsinformation vom Neigungssensor (26), die Verortung, insbesondere mit zumindest einer Normalhöhe und einen lateralen Positionsversatz, in Bezug auf die Bodenmarke (4) berechnet, und diese Verortung über die Kommunikationseinheit (23) bereitstellt, wobei das Modul (1) dazu ausgebildet ist, die Stationierung des Vermessungsgeräts (2) in Bezug zu der Bodenmarke (4) während eines Messbetriebs des Vermessungsgeräts zu überwachen.

2. Modul (1) nach Anspruch 1, **dadurch gekennzeichnet, dass** das Modul (1) mit:
▪ einem Laserpointer (28), mit dessen Laserstrahlung (281) eine elektrooptische Distanzmessung zu einem Auftreffpunkt der Laserstrahlung (281) durchführbar ist, und
▪ einer Ablenkeinheit (28s) für den Laserpointer (28), welche derart ausgebildet ist, dass dessen Laserstrahlung (281) in Bezug auf das Modul (1) auf den Bodenpunkt (4) ausrichtbar ist, ausgebildet ist und
wobei die Verortungseinheit (27), derart ausgebildet ist, dass diese mit
▪ einer Distanzinformation von der elektrooptischen Distanzmessung (28a), und
▪ einer Ablenkinformation der Laserstrahlung (281) in Bezug auf das Modul (1), insbesondere wobei die Ablenkinformation anhand der Bildinformation eines Auftreffpunkts der Laserstrahlung (281) von der Messkamera-Einheit (25) oder von einem Lagenerfassungs-Sensor der Ablenkeinheit (28s) ermittelt wird,
die Verortung durchführt.

3. Modul (1) nach zumindest einem der Ansprüche 1 oder 2, **dadurch gekennzeichnet, dass** das Modul (1) als Tribrach (8) mit einer, zwei oder drei manuell justierbaren Stellschrauben (21) ausgebildet ist, insbesondere wobei eine Höhe eines Pivotpunktes (56) des Moduls (1) beim Stellen der Stellschrauben (21) unverändert bleibt.

4. Modul (1) nach zumindest einem der Ansprüche 1 bis 3, **dadurch gekennzeichnet, dass**
die Verortungseinheit (27) derart ausgebildet ist, dass diese anhand einer bereitgestellten oder vom Modul (1), insbesondere mittels eines GNSS oder GPS-Empfängers, ermittelten Grob-Position eines aktuellen Standorts des Moduls (1),
eine lokale- oder Cloud-Datenbank von Bodenmarkierungen (4) am oder um den aktuellen Standort abfragt, und
anhand der Datenbank ein äußeres Koordinatensystem (20a) der Bodenmarke (4) am aktuellen Standort zuordnet.

5. Modul (1) nach zumindest einem der Ansprüche 1 bis 4, **dadurch gekennzeichnet, dass**
das Modul (1) einen elektronischen Kompass (29), insbesondere zur magnetischen oder gyroskopischen Azimutalausrichtungsbestimmung gegenüber Norden, aufweist, und die Verortungseinheit (27) bei der Verortung eine Azimutalinformation vom Kompass (29) miteinbezieht.

6. Modul (1) nach zumindest einem der Ansprüche 1 bis 5, **dadurch gekennzeichnet, dass**
das Blickfeld (10) der Messkamera-Einheit (25) zentral durch das Stativ (3) hinweg angeordnet ist, insbesondere durch eine Herzschraube (35),
wobei, bei einem Modul nach Anspruch 2, das Modul insbesondere über eine Einspiegelung des Laserpointers (28) in das Blickfeld (10) der Messkamera-Einheit (25) verfügt oder das Modul insbesondere über eine derart einschwenkbar oder verschiebbar ausgebildete Messkamera-Einheit und/oder einen derart einschwenkbar oder verschiebbar ausgebildeten Laserpointer verfügt, dass
wahlweise entweder das Blickfeld (10) oder der Laserpointer (28) zentral durch das Stativ (3) hinweg gerichtet ist.

7. Modul (1) nach zumindest einem der Ansprüche 1 bis 6, **dadurch gekennzeichnet, dass** das Blickfeld (10) der Messkamera-Einheit (25) seitlich an einer Stativschulter (3s) oder einem Stativteller (3t) des Stativs (3) vorbei angeordnet und in Richtung Bodenpunkt (4) ausgerichtet ist.

8. Modul (1) nach Anspruch 2 oder einem von diesem abhängigen Anspruch 3 bis 7, **dadurch gekennzeichnet, dass** die Ablenkeinheit (28s) motorisch bewegt wird oder die Ablenkeinheit (28s) manuell vom Benutzer bewegt wird.

9. Modul (1) nach zumindest einem der Ansprüche 1 bis 8, **dadurch gekennzeichnet, dass** das Vermessungsgerät (2)
▪ ein Theodolit,
▪ ein Tachymeter,
▪ eine Totalstation,
▪ ein Laserscanner,
▪ ein Lasertracker,
▪ ein GNSS-Empfänger, oder
▪ ein Nivellier oder Rotationslaser
ist, und/oder das Stativ (3) eine Aufstelleinrichtung in der Bauart
▪ eines Dreibeins,
▪ eines Vermessungsstativs,
▪ eines Klemmstativs,
▪ eines Messpfeilers, oder
▪ einer temporär montierten Vermessungskonsole
ist.

10. System bestehend aus einem Modul (1) nach zumindest einem der Ansprüche 1 bis 9 mit einer Zieltafel (39), ausgebildet zur im wesentlichen horizontalen Auflage auf einer Bodenmarke (4), insbesondere ausgebildet als flache Platte welche auf den Boden (9) gelegt oder fixiert werden kann,
mit
einem visuell erfassbaren Kontrastmuster (38) bekannter absoluter Dimension, insbesondere wobei diese Dimension auf der Zieltafel (39) angegeben oder codiert ist,
einer Einrichtung zur Positionierung der Zieltafel (39) über der Bodenmarke (4), ausgebildet als ein im Wesentlichen zentrisches Loch oder transparentes Fenster zur Positionierung über der Bodenmarke, vorzugsweise mit einem Fadenkreuz im Loch oder Fenster.

11. System nach Anspruch 10,
**gekennzeichnet durch** einen Magnetnadelkompass (58) in der Ebene der Zieltafel (39) zur nordreferenzierten Azimutal-Ausrichtungsbestimmung der Zieltafel (39), und/oder
eine Dosenlibelle (59) oder zwei orthogonalen Röhrenlibellen in der Ebene der Zieltafel (39) zur Horizontalausrichtungsbestimmung der Zieltafel (39), insbesondere wobei diese derart ausgebildet und angeordnet sind, dass deren Messwerte in einem, von einer Messkamera-Einheit (25) erfassten Bild der Zieltafel (39) automatisiert ablesbar sind.

12. Verfahren zur Verortung eines Vermessungsgeräts (2), welches mittels eines Stativs (3) über einer Bodenmarke (4) stationiert wird mit einem eigenständigen Modul (1) nach zumindest einem der Ansprüche 1 bis 9, welches zwischen dem Stativ und dem Vermessungsgerät angebracht ist, mit
▪ einem Aufnehmen eines Bilds des Bodens (9) unter dem Stativ (3) mit einer Messkamera (25) im Modul (1),
▪ einem Identifizieren eines Bodenpunkts (4) im Bild und einem Vermessen des Bodenpunkts (4) im Bild,
▪ einem Erfassen eines Neigungswerts des Moduls (1) in zumindest zwei Achsen in Bezug auf eine Horizontal-oder Vertikalrichtung mit einem Neigungssensor (26) im Modul (1),
▪ einem Berechnen einer Verortung des Moduls (1) in Bezug auf die Bodenmarke (4) basierend auf der Vermessung des Bodenpunkts (4) im Bild und des Neigungswerts, mit einer Verortungseinheit im Modul (1), und
▪ einem direkten oder indirekten Kommunizieren der Verortung und/oder der für die Verortung vom Modul (1) ermittelten Rohdaten mittels einer Kommunikationseinheit (23) im Modul (1) an das Vermessungsgerät (2).

13. Verfahren nach Anspruch 12, **gekennzeichnet durch** ein Vermessen einer Schrägdistanz vom Modul (1) zum Bodenpunkt (4) mit einem, durch eine Ausrichteinheit auf den Bodenpunkt ausrichtbaren entfernungsmessenden Laserpointer (28), welche Schrägdistanz in der Verortung mit einbezogen wird, insbesondere mit einem Berechnen einer vertikalen Normalhöhe des Moduls (1) über dem Bodenpunkt (4) basierend auf der Schrägdistanz und der Neigungsinformation, und/oder ein Ermitteln einer azimutalen Ausrichtung mit Daten vom Vermessungsgerät (2), von einer Zieltafel (39) oder mit einer Kompass-Einheit (29) im Modul (1), wobei diese azimutale Kompassausrichtung in der Verortung mit einbezogen wird.

14. Verfahren nach zumindest einem der Ansprüche 12 oder 13, **gekennzeichnet durch**
ein Markieren der Bodenmarke (4) mit einer Zieltafel (39), welche Zieltafel (39) mit bekannten visuellen Mustern (38) derart ausgebildet ist, dass mit dem Vermessen der visuellen Muster (38) im Bild der Messkamera (25) eine Relativlage zwischen Messkamera (25) und der Bodenmarke (4) in zumindest drei Freiheitsgraden ermittelbar ist, wobei die Verortung des Moduls (1) basierend auf dieser Relativlage erfolgt.

## Claims

1. Stand-alone module (1) for localizing a surveying device (2), which is stationed with a stand (3) above a ground mark (4), in relation to the ground mark (4), having
▪ a housing (11), which is designed to be attached between the stand (3) and the surveying device (2), with a lower mounting plate (1f) for connecting to the stand (3) and with an upper mounting plate (1t) for connecting to the surveying device (2),
▪ a measuring camera unit (25), which is arranged and designed in such a way that when the module (1) is mounted on a stand (3) the ground mark (4) can be detected in the field of view of the measuring camera unit (25),
▪ a power supply (22), in particular a preferably rechargeable battery,
▪ an inclination sensor (26), to determine an inclination of the module (1) with respect to a horizontal direction,
▪ a communication unit (23), for preferably wireless communication with the surveying device (2) and/or an external operating unit (31),
▪ a localization unit (27), which is designed in such a way that with
∘ image information of the ground mark (4) from the measuring camera unit (25), in particular with a measurement of the ground mark (4) or a visual pattern (38) of a defined target plate (39) in the image information with an electronic image processing, and
∘ inclination information from the inclination sensor (26),
it calculates the location, in particular with at least one normal height and one lateral position offset, in relation to the ground mark (4) and provides this location via the communication unit (23), whereby the module is designed for monitoring the location of the surveying device during a measuring operation of the surveying device.

2. Module (1) according to Claim 1, **characterized in that** the module (1) is designed with:
▪ a laser pointer (28), with the laser radiation (281) of which an electro-optical distance measurement to a point of incidence of the laser radiation (281) can be carried out, and
▪ a deflection unit (28s) for the laser pointer (28), which is designed in such a way that the laser radiation (281) thereof can be oriented onto the ground point (4) with respect to the module (1), and
wherein the localization unit (27) is designed in such a way that it performs the localization with
▪ distance information from the electro-optical distance measurement (28a), and
▪ deflection information of the laser radiation (281) with respect to the module (1), in particular wherein the deflection information is determined based on image information of an incidence point of the laser radiation (281) from the measuring camera unit (25), or from a position detection sensor of the deflection unit (28s).

3. Module (1) according to at least one of Claims 1 or 2, **characterized in that** the module (1) is designed as a tribrach (8) with one, two or three manually adjustable adjustment screws (21), in particular wherein a height of a pivot point (56) of the module (1) remains unchanged when adjusting the screws (21).

4. Module (1) according to any one of Claims 1 to 3, **characterized in that**
the localization unit (27) is designed in such a way that, based on a coarse position of a current location of the module (1), either provided or determined by the module (1), in particular by means of a GNSS or GPS receiver, the localization unit queries a local or cloud database of ground marks (4) at or around the current location, and on the basis of the database an external coordinate system (20a) is assigned to the ground mark (4) at the current location.

5. Module (1) according to any one of Claims 1 to 4, **characterized in that**
the module (1) has an electronic compass (29), in particular for determining a magnetic or gyroscopic azimuthal alignment with respect to North, and the localization unit (27) incorporates azimuthal information from the compass (29) in the localization.

6. Module (1) according to any one of Claims 1 to 5, **characterized in that**
the field of view (10) of the measuring camera unit (25) is arranged centrally right through the stand (3), in particular by a heart-shaped screw (35),
whereby for a module according to claim 2 the module in particular with a reflection of the laser pointer (28) into the field of view (10) of the measuring camera unit (25), or the module in particular comprises a measuring camera unit that can be pivoted or displaced in such a way and/or a laser pointer that can be pivoted or displaced in such a way, that optionally either the field of view (10) or the laser pointer (28) is directed centrally right through the stand (3).

7. Module (1) according to any one of Claims 1 to 6, **characterized in that**
the field of view (10) of the measuring camera unit (25) is arranged past and to the side of a stand shoulder (3s) or a stand plate (3t) of the stand (3) and aligned in the direction of the ground point (4).

8. Module (1) according to any one of Claims 1 to 7, **characterized in that**
The deflection unit (28s) is moved by motors or the deflection unit (28s) is moved manually by the user.

9. Module (1) according to any one of Claims 1 to 8, **characterized in that** the surveying device (2) is
▪ a theodolite,
▪ a tachymeter,
▪ a total station,
▪ a laser scanner,
▪ a laser tracker,
▪ a GNSS receiver, or
▪ a leveler or rotating laser
and/or the stand (3) is a mounting device in the form of
▪ a tripod,
▪ a surveying stand,
▪ a clamp stand,
▪ a surveying pillar, or
▪ a temporarily mounted surveying console.

10. System consisting of a module (1) according to at least one of Claims 1 to 9 with a target plate (39), designed to provide substantially horizontal support on a ground mark (4),
in particular for use with a module (1) according to at least one of Claims 1 to 9,
in particular designed as a flat plate which can be attached or fixed to the ground (9),
with
a visually detectable contrast pattern (38) of known absolute dimension, in particular wherein this dimension is indicated or coded on the target plate (39),
a device for positioning the target plate (39) above the ground mark (4), in particular designed as an essentially centric hole or transparent window for positioning above the ground mark, preferably with a crosshair in the hole or window.

11. System according to Claim 10, **characterized by** a magnetic needle compass (58) in the plane of the target plate (39) to determine the north-referenced azimuthal alignment of the target plate (39), and/or
a circular spirit level (59) or two orthogonal tubular spirit levels in the plane of the target plate (39) for determining the horizontal alignment of the target plate (39), in particular wherein these are designed and arranged in such a way that their measurement values can be read off automatically in an image of the target plate (39) acquired by a measuring camera unit (25) .

12. Method for localizing a surveying device (2), which is positioned by way of a stand (3) above a ground mark (4) with a stand-alone module (1) according to at least one of Claims 1 to 9, which is attached between the stand and the surveying device, with
▪ a recording of an image of the ground (9) under the stand (3) with a measuring camera (25) in the module (1),
▪ identifying a ground point (4) in the image and surveying the ground point (4) in the image,
▪ detecting an inclination value of the module (1) in at least two axes in relation to a horizontal or vertical direction with an inclination sensor (26) in the module (1),
▪ calculating a localization of the module (1) with respect to the ground mark (4) based on measurement of the ground point (4) in the image and of the inclination value, with a localization unit in the module (1), and
▪ directly or indirectly communicating the determined position and/or the raw data for the position determined by the module (1) by means of a communication unit (23) in the module (1) to the surveying device (2).

13. Method according to Claim 12, **characterized by** measuring an inclined distance from the module (1) to the ground point (4) with a distance-measuring laser pointer (28) that can be aligned to the ground point by an alignment unit, and taking this inclined distance into account in the localization, in particular with calculation of a vertical normal height of the module (1) above the ground point (4) based on the inclined distance and the inclination information, and/or determining an azimuthal alignment with data from the surveying device (2), from a target plate (39) or with a compass unit (29) in the module (1), and also incorporating this azimuthal compass orientation into the localization.

14. Method according to at least one of Claims 12 or 13, **characterized by**
marking the ground mark (4) with a target plate (39), which target plate (39) is designed with known visual features in such a way that by measurement of the visual features in the image of the measuring camera (25) a relative position between the measuring camera (25) and the ground mark (4) can be determined in at least three degrees of freedom, wherein
the localization of the module (1) is carried out based on this relative position.

## Revendications

1. Module indépendant (1) destiné à être monté entre un pied (3) et un appareil d'arpentage (2) et destiné à localiser l'appareil d'arpentage (2) stationné au-dessus d'une marque au sol (4) avec le pied (3) par rapport à la marque au sol (4), doté
- d'un boîtier, lequel est réalisé pour être monté entre le pied (3) et l'appareil d'arpentage (2), doté d'une plaque de montage inférieure (1f) destinée à être reliée au pied (3) et d'une plaque de montage supérieure (1t) destinée à être reliée à l'appareil d'arpentage (2),
- d'une unité de caméra de mesure (25), laquelle est réalisée et disposée de telle sorte que lorsque le module (1) est monté sur un pied (3), la marque au sol (4) peut être saisie dans le champ de vision de l'unité de caméra de mesure (25),
- d'une alimentation en énergie (22), en particulier une batterie de préférence rechargeable,
- d'un capteur d'inclinaison (26) destiné à déterminer une inclinaison du module (1) par rapport à une direction horizontale,
- d'une unité de communication (23), destinée à la communication de préférence sans fil avec l'appareil d'arpentage (2) et/ou une unité de commande externe (31),
- d'une unité de localisation (27), laquelle est réalisée de telle sorte qu'avec
o une information graphique de la marque au sol (4) provenant de l'unité de caméra de mesure (25), en particulier avec un mesurage de la marque au sol (4) ou d'un motif visuel (38) d'une plaque de mire définie (39) dans l'information graphique avec un traitement d'image électronique, et
o une information d'inclinaison provenant du capteur d'inclinaison (26), elle calcule la localisation par rapport à la marque au sol (4), en particulier avec au moins une hauteur normale et un décalage positionnel latéral, et fournit cette localisation par le biais de l'unité de communication (23), dans lequel le module (1) est réalisé de façon à contrôler le stationnement de l'appareil d'arpentage (2) par rapport à la marque au sol (4) pendant un mode de mesure de l'appareil d'arpentage.

2. Module (1) selon la revendication 1, **caractérisé en ce que** le module est réalisé avec :
- un pointeur laser (28), avec le faisceau laser (281) duquel une mesure de distance électrooptique jusqu'à un point d'impact du faisceau laser (281) peut être mise en œuvre, et
- une unité de déviation (28s) pour le pointeur laser (28), laquelle est réalisée de telle sorte que son faisceau laser (281) est orientable sur le point au sol (4) par rapport au module (1),
et
dans lequel l'unité de localisation (27) est réalisée de telle sorte qu'elle effectue la localisation avec
- une information de distance provenant de la mesure de distance électrooptique (28a), et
- une information de déviation du faisceau laser (281) par rapport au module (1), en particulier dans lequel l'information de déviation est déterminée par l'unité de caméra de mesure (25) ou par un capteur de détection de position de l'unité de déviation (28s) à l'aide de l'information graphique d'un point d'impact du faisceau laser (281).

3. Module (1) selon au moins une des revendications 1 ou 2, **caractérisé en ce que** le module (1) est réalisé comme embase (8) dotée d'une, deux ou trois vis de réglage (21) manuellement ajustables, en particulier dans lequel une hauteur d'un point de pivot (56) du module (1) reste invariante en cas de réglage des vis de réglage (21) .

4. Module (1) selon au moins une des revendications 1 à 3, **caractérisé en ce que**
l'unité de localisation (27) est réalisée de telle sorte que celle-ci, à l'aide d'une position grossière d'un emplacement actuel du module (1) fournie ou déterminée par le module (1), en particulier au moyen d'un récepteur GNSS ou GPS,
interroge une base de données de marques au sol (4) locale ou dans le cloud sur l'emplacement actuel, et
associe à l'aide de la base de données un système de coordonnées extérieur (20a) aux marques au sol (4) à l'emplacement actuel.

5. Module (1) selon au moins une des revendications 1 à 4, **caractérisé en ce que**
le module (1) comporte une boussole électronique (29), en particulier pour la détermination magnétique ou gyroscopique de l'orientation azimutale par rapport au Nord, et l'unité de localisation (27) tient compte d'une information d'azimut de la boussole (29) lors de la localisation.

6. Module (1) selon au moins une des revendications 1 à 5, **caractérisé en ce que**
le champ de vision (10) de l'unité de caméra de mesure (25) est disposé de manière centrale à travers le pied (3), en particulier par une vis papillon (35), dans lequel, pour un module selon la revendication 2, le module dispose en particulier d'une introduction par miroirs du pointeur laser (28) dans le champ de vision (10) de l'unité de caméra de mesure (25) ou le module dispose en particulier d'une unité de caméra de mesure réalisée de manière pivotante ou coulissante de telle sorte et/ou d'un pointeur laser réalisé de manière pivotante ou coulissante de telle sorte qu'au choix, ou bien le champ de vision (10) ou bien le pointeur laser (28) est dirigé de manière centrale à travers le pied (3) .

7. Module (1) selon au moins une des revendications 1 à 6, **caractérisé en ce que**
le champ de vision (10) de l'unité de caméra de mesure (25) est disposé latéralement au-delà d'un épaulement de pied (3s) ou d'un plateau de pied (3t) du pied (3) et est orienté en direction du point au sol (4).

8. Module (1) selon la revendication 2 ou l'une des revendications 3 à 7 qui en dépendent, **caractérisé en ce que**
l'unité de déviation (28s) est déplacée de manière motorisée ou l'unité de déviation (28s) est déplacée manuellement par l'utilisateur.

9. Module (1) selon au moins une des revendications 1 à 8, **caractérisé en ce que** l'appareil d'arpentage (2) est
- un théodolite,
- un tachéomètre,
- une station totale,
- un scanner laser,
- une poursuite laser,
- un récepteur GNSS, ou
- un niveau optique ou un laser rotatif,
et/ou le pied (3) est un dispositif d'installation du type
- d'un trépied,
- d'un pied d'arpentage,
- d'un pied à serrage,
- d'un pilier de mesure, ou
- d'une console d'arpentage montée de manière temporaire.

10. Système constitué d'un module (1) selon au moins une des revendications 1 à 9 doté d'une plaque de mire (39), réalisée pour reposer de manière sensiblement horizontale sur une marque au sol (4), en particulier réalisée comme plaque plate pouvant être déposée ou fixée sur le sol (9),
avec
un motif contrasté (38) de dimensions absolues connues pouvant être saisi visuellement, en particulier dans lequel ces dimensions ces dimensions sont données ou codées sur la plaque de mire (39),
un dispositif destiné à positionner la plaque de mire (39) au-dessus de la marque au sol (4), réalisé comme un trou sensiblement central ou une fenêtre transparente destiné à être positionné au-dessus de la marque au sol, de préférence avec un réticule dans le trou ou la fenêtre.

11. Système selon la revendication 10,
**caractérisé par** une boussole à aiguille aimantée (58) dans le plan de la plaque de mire (39) pour la détermination de l'orientation azimutale de la plaque de mire (39) en référence au Nord, et/ou
un niveau à bulle sphérique (59) ou deux niveaux à bulle tubulaires orthogonaux dans le plan de la plaque de mire (39) pour la détermination de l'orientation horizontale de la plaque de mire (39), en particulier dans lequel ceux-ci sont réalisés et disposés de telle sorte que leurs valeurs de mesure sont lisibles automatiquement dans une image de la plaque de mire (39) saisie par une unité de caméra de mesure (25).

12. Procédé de localisation d'un appareil d'arpentage (2), lequel est stationné au-dessus d'une marque au sol (4) au moyen d'un pied (3), avec un module indépendant (1) selon au moins une des revendications 1 à 9, lequel est monté entre le pied et l'appareil d'arpentage, avec
- une capture d'une image du sol (9) sous le pied (3) avec une caméra de mesure (25) dans le module (1),
- une identification d'un point au sol (4) dans l'image et un mesurage du point au sol (4) dans l'image,
- une saisie d'une valeur d'inclinaison du module (1) dans au moins deux axes par rapport à une direction horizontale ou verticale avec un capteur d'inclinaison (26) dans le module (1),
- un calcul d'une localisation du module (1) par rapport au marquage au sol (4) basé sur le mesurage du point au sol (4) dans l'image et la valeur d'inclinaison avec une unité de localisation dans le module (1), et
- une communication directe ou indirecte à l'appareil d'arpentage (2) de la localisation et/ou des données brutes déterminées pour la localisation du module (1) au moyen d'une unité de communication (23) dans le module (1).

13. Procédé selon la revendication 12, **caractérisé par**
un mesurage d'une distance oblique du module (1) jusqu'au point au sol (4) avec un pointeur laser télémétrique (28) orientable sur le point au sol par une unité d'orientation, laquelle distance oblique est incluse dans la localisation,
en particulier avec un calcul d'une hauteur normale verticale du module (1) au-dessus du point au sol (4) basé sur la distance oblique et l'information d'inclinaison, et/ou une détermination d'une orientation azimutale avec des données provenant de l'appareil d'arpentage (2), d'une plaque de mire (39) ou avec une unité de boussole (29) dans le module (1), dans lequel cette orientation azimutale est incluse dans la localisation.

14. Procédé selon au moins une des revendications 12 ou 13, **caractérisé par**
un marquage de la marque au sol (4) avec une plaque de mire (39), laquelle plaque de mire (39) est réalisée dotée de motifs visuels connus (38) de telle sorte qu'une position relative entre la caméra de mesure (25) et la marque au sol (4) est déterminable dans au moins trois degrés de liberté avec le mesurage du motif visuel (38) dans l'image de la caméra de mesure (25), dans lequel la localisation du module (1) est effectuée sur la base de cette position relative.
